# EUROPEAN PATENT APPLICATION

(11) **EP 4 426 019 A1**
(43) Date of publication of application: **04.09.2024**
(21) Application number: 24160819.9
(22) Date of filing: 01.03.2024
(51) Int. Cl.: H04W 52/02, H04W 84/12

(54) **ACCESS POINT (AP) POWER SAVE ENHANCEMENTS**

(30) Priority: 03.03.2023 US 202363449854 P; 26.02.2024 US 202418587649
(71) Applicant: Apple Inc., Cupertino, CA 95014 (US)
(72) Inventor: KNECKT, Jarkko L., Cupertino, 95014 (US); THAKUR, Sidharth R., Cupertino, 95014 (US); LIU, Yong, Cupertino, 95014 (US); WANG, Qi, Cupertino, 95014 (US); WU, Tianyu, Cupertino, 95014 (US); VERMA, Lochan, Cupertino, 95014 (US); YONG, Su Khiong, Cupertino, 95014 (US); JIANG, Jinjing, Cupertino, 95014 (US); HEDAYAT, Ahmad Reza, San Diego, 92121 (US)
(74) Representative: Froud, Christopher Andrew

(57) **Abstract**

Some embodiments include an apparatus, method, and computer program product for access point (AP) power save enhancements. AP power save enhancements reduce power consumption for APs including multi-link device (MLD) APs, mobile APs and mobile AP stations. Some embodiments include an uplink (UL) multi-user (MU)-Request to Send (RTS) power save feature, that allows an AP to be available while operating in a low power receive (LPR) state (e.g., low power mode) and transition to a full power mode to receive data using a bandwidth greater than 20 MHz. Some embodiments include a Target Wake Time (TWT) UL MU-RTS AP power enhancement feature that allows an AP to operate in the LPR during a TWT service period (SP). Some embodiments allow mobile devices (e.g., a smart phone) to operate in as an AP (e.g., a mobile AP, a mobile AP station) and reduce power consumption.

## Description

### CROSS-REFERENCE TO RELATED APPLICATION

This application claims benefit of U.S. Provisional Patent Application No. 63/449,854, filed on March 3, 2023 and U.S. Patent Application No. 18/587,649 filed on February 26, 2024.

### BACKGROUND

### Field

The described embodiments relate generally to access point (AP) power saving in a wireless communications system.

### Related Art

Wireless communications systems support communications between an access point (AP) and a communications device, such as a station (STA). Communications can be performed in accordance with one or more protocols, such as IEEE 802.11 protocols.

### SUMMARY

Some embodiments include a system, apparatus, article of manufacture, method, and/or computer program product and/or combinations and sub-combinations thereof, for access point (AP) power save enhancements.

In some embodiments, an AP can receive, via a transceiver (e.g., a data radio) operating in a low power receive (LPR) state, a first uplink (UL) multi-user (MU)-Request to Send (RTS) frame, where the AP has set a UL MU-RTS Enabled value to enabled. The AP can begin to transition the transceiver to a full power state (or a higher power state) during a first padding duration corresponding to the first UL MU-RTS frame, where the first padding duration is based on a capability of the AP. The AP can receive first data via the transceiver operating in the full power state and transition the transceiver to the LPR state (or lower power state) after reception of the first data. In some embodiments, the bandwidth for receiving the first data is greater than 20 MHz.

In some embodiments, the AP can configure a first Target Wake Time (TWT) service period (SP) with a TWT UL MU-RTS Enabled value equal to (or set to) disabled, and configure an AP TWT Required value equal to disabled, such that the transceiver is in the LPR state outside of the first TWT SP. The AP can transition the transceiver to a full power state at a start of the first TWT SP. In some embodiments, when the first TWT SP overlaps with a second TWT SP, when the TWT UL MU-RTS Enabled value is set to enabled for the second TWT SP, the AP can operate the transceiver at the highest availability required by the first TWT SP. In some embodiments, when the first TWT SP and the second TWT SP correspond to a same station (STA), the AP can transmit to the STA, a signal for an early termination of the first TWT SP and the second TWT SP, and transition the transceiver to an off state (or a lower power state) subsequent to confirmation of receipt of the signal for the early termination.

In some embodiments, the AP can configure a first Target Wake Time (TWT) service period (SP) with a TWT UL MU-RTS Enabled value equal to enabled and configure an AP TWT Required value equal to enabled, wherein the transceiver is in an OFF state outside of the first TWT SP. Further, the AP can transition the transceiver to the LPR state at a start of the first TWT SP.

In some embodiments, the AP can receive, via the transceiver operating in the LPR state, a second UL MU-RTS frame based on the UL MU-RTS Enabled value of enabled, and begin to transition the transceiver to a full power state during a second padding duration corresponding to the second UL MU-RTS frame. The AP can receive second data via the transceiver in the full power state and then transition the transceiver to the LPR state, wherein no transmissions occur during a Point Coordination Function (PCF) Interframe Space (PIFS) following the second data.

In some embodiments, the AP can receive, via the transceiver operating in the LPR state, a second UL MU-RTS frame based on the UL MU-RTS Enabled value being set to enabled, and begin to transition the transceiver to a full power state during a second padding duration corresponding to the second UL MU-RTS frame. The AP can receive second data via the transceiver in the full power state, wherein the transceiver remains in the full power state until an end of the first TWT SP.

In some embodiments, the AP is a first AP in a multilink device (MLD) AP, and the MLD AP includes a second AP. The AP can transmit a beacon comprising an impending lower availability indication for the second AP, where the impending lower availability indication includes a number of target beacon transmission times (TBTTs) before a power change corresponding to the impending lower availability indication occurs. In some embodiments, the AP can detect a transmission from a legacy station (STA) and transition to the full power state based at least on the detecting, wherein the transition to the full power state occurs in conjunction with a next beacon period.

### BRIEF DESCRIPTION OF THE FIGURES

The accompanying drawings, which are incorporated herein and form part of the specification, illustrate the presented disclosure and, together with the description, further serve to explain the principles of the disclosure and enable a person of skill in the relevant art(s) to make and use the disclosure.
FIG. 1 illustrates an example system for access point (AP) power save enhancements, in accordance with some embodiments of the disclosure.
FIG. 2 illustrates a block diagram of an example wireless system for AP power save enhancements, according to some embodiments of the disclosure.
FIG. 3 illustrates an example of AP radios, according to some embodiments of the disclosure.
FIG. 4A illustrates examples of power savings, according to some embodiments of the disclosure.
FIG. 4B illustrates an example of AP power save enhancements with an uplink (UL) multi-user (MU)-Request to Send (RTS) Enabled feature, according to some embodiments of the disclosure.
FIG. 5 illustrates examples for returning to a low power receive (LPR) state, according to some embodiments of the disclosure.
FIG. 6A illustrates an example of compatibility with a legacy station (STA), according to some embodiments of the disclosure.
FIG. 6B illustrates an example of AP power save enhancements supporting compatibility with a legacy STA, according to some embodiments of the disclosure.
FIG. 7A illustrates an example Target Wake Time (TWT) service period (SP), according to some embodiments of the disclosure.
FIG. 7B illustrates an example of AP power save enhancements with TWT Required and UL MU-RTS Enabled features, according to some embodiments of the disclosure.
FIG. 8 illustrates examples of availability settings and AP radio use with AP power save enhancements, according to some embodiments of the disclosure.
FIG. 9 illustrates more detailed examples of availability settings and AP radio use with AP power save enhancements, according to some embodiments of the disclosure.
FIG. 10A illustrates an example of early termination, according to some embodiments of the disclosure.
FIG. 10B illustrates an example of AP power save enhancements with early termination, according to some embodiments of the disclosure.
FIG. 11 illustrates an example of AP power save enhancements with overlapping TWT SPs, according to some embodiments of the disclosure.
FIG. 12A illustrates an example of lower power change signaling, according to some embodiments of the disclosure.
FIG. 12B illustrates an example of AP power save enhancements with affiliated AP availability signaling, according to some embodiments of the disclosure.
FIG. 12C illustrates an example of AP power save enhancements with impending lower power change and affiliated AP availability signaling via beacons, according to some embodiments of the disclosure.
FIG. 13 illustrates an example of AP power save enhancements with Reduced Neighbor Report (RNR) for AP availability signaling, according to some embodiments of the disclosure.
FIG. 14 illustrates an example of AP power save enhancements with multi-link (ML) Reconfiguration Element for AP availability change signaling, according to some embodiments of the disclosure.
FIG. 15 is an example computer system for implementing some embodiments or portion(s) thereof.
FIG. 16 illustrates an example of AP high power consumption according to some embodiments of the disclosure.
FIG. 17A illustrates an example method for AP power save enhancements with UL MU-RTS Enabled, according to some embodiments of the disclosure.
FIG. 17B illustrates an example method for AP power save enhancements with TWT Required and UL MU-RTS Enabled, according to some embodiments of the disclosure.

The presented disclosure is described with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION

Some embodiments include a system, apparatus, article of manufacture, method, and/or computer program product and/or combinations and sub-combinations thereof, for access point (AP) power save enhancements. AP power save enhancements reduce power consumption for APs, including mobile APs and mobile AP stations. Some embodiments include an uplink (UL) multi-user (MU)-Request to Send (RTS) Enabled feature that allows an AP to be available while operating in a low power receive (LPR) state (e.g., a low power mode.) Some embodiments include a Target Wake Time (TWT) Required feature that allows an AP to be available only during a TWT service period (SP). Some embodiments include an AP that configures TWT flows for a TWT UL MU-RTS Enabled feature for a particular TWT SP. Some embodiments are directed to mobile devices (e.g., a smart phone) that operate as an AP (e.g., a mobile AP, a mobile AP station) and allow them to reduce power consumption.

Access points (APs) communicating with one or more stations (STAs) via Wi-Fi can operate with high power consumption. Associated STAs, including legacy STAs, may assume that the AP is always available to receive transmissions with the maximum supported: bandwidth (BW), number of spatial streams (NSS), and modulation coding scheme (MCS). Thus, the AP power consumption can be high even when the traffic load is low (e.g., when no one is at home, after work hours in an office building, or in an environment when no one is present).

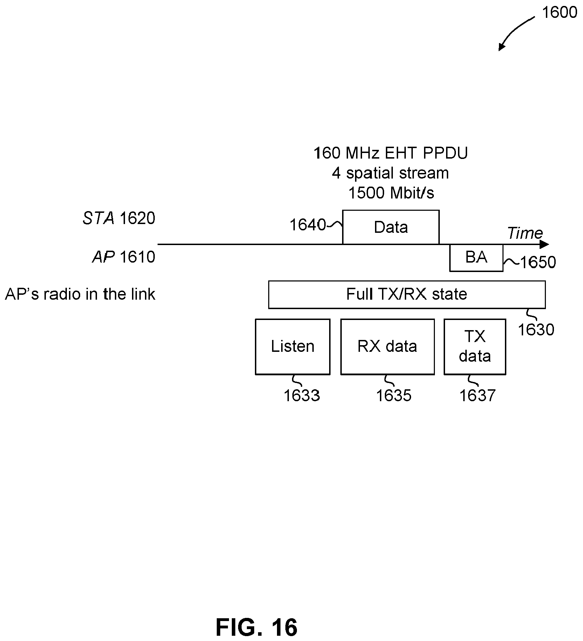

FIG. 16 illustrates an example 1600 of AP high power consumption according to some embodiments of the disclosure. The example 1600 illustrates communication between STA 1620 and AP 1610, in which AP 1610 (e.g., a data radio) operates with high power consumption shown as full transmit (TX)/receive (RX) mode 1630. While in the full TX/RX mode 1630, AP 1610 can listen during listen interval 1633, receive data 1640 from STA 1620 during RX data 1635, and transmit block acknowledgement (BA) 1650 to STA 1620 during TX data 1637. Thus, even when the traffic load is low or non-existent, AP 1610 may still operate in full TX/RX mode 1630, which is characterized by high power consumption. Some embodiments include AP power save enhancements that reduce power consumption for APs, including mobile APs and mobile AP stations.

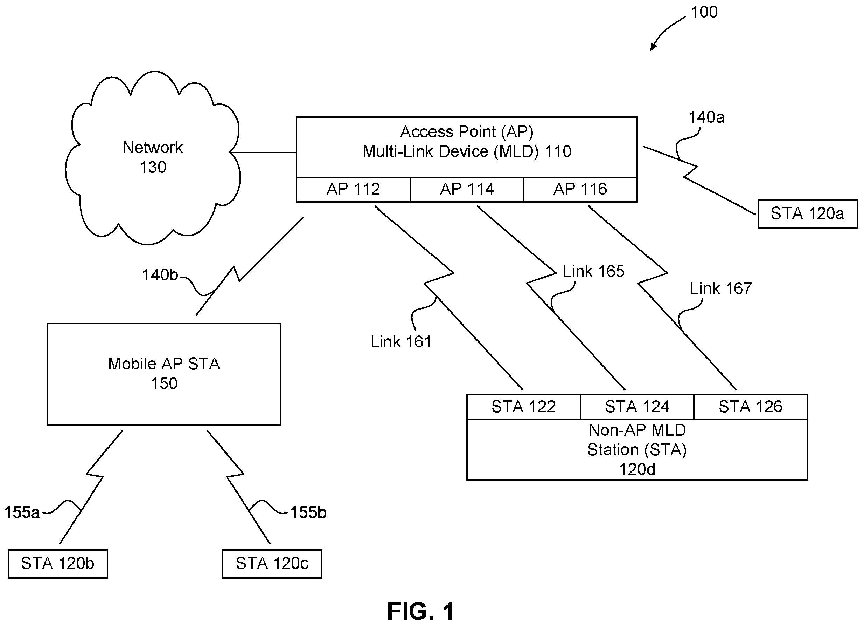

FIG. 1 illustrates example system 100 for AP power save enhancements, in accordance with some embodiments of the disclosure. Example system 100 is provided for the purpose of illustration only and is not limiting of the disclosed embodiments. System 100 may include, but is not limited to, AP multi-link device (MLD) 110 that provides access to network 130 for non-AP MLD station (STA) 120d, STAs 120a, 120b, and 120c, and mobile AP STA 150. AP MLD 110 may include multiple APs 112, 114, and 116 that correspond to various respective links. For example, AP 112 can communicate via 2.4 GHz identified by link 161; AP 114 can communicate via 5 GHz identified by link 165, and AP 116 can communicate via 6 GHz identified by link 167. Any or all of AP 112, AP 114, and AP 116 may have a radio transceiver that operates independently from one or more other radio transceivers associated with the remaining APs. For example, AP MLD 110 can utilize one or more radios (e.g., 3 transceivers) to communicate over multiple links (e.g., over one or more frequency bands) to non-AP MLD STA 120a. For example, AP MLD 110 can utilize one or more transceivers of AP 112, AP 114, and/or AP 116 to communicate with STA 120a via link 161, link 165, and/or link 167, shown as communication 140a.

Non-AP MLD STAs 122, 124, and 126 of non-AP MLD STA 120d, and mobile AP STA 150 in proximity to AP MLD 110, may associate with AP MLD 110. For example, non-AP MLD STA 120d can scan and identify AP MLD 110 across all three links. After associating with AP MLD 110, non-AP MLD STA 120d can communicate via any of the links link 161, link 165, and/or link 167 that are available in, for example, three different frequency bands, e.g., 2.4 GHz, 5 GHz, and 6 GHz. If one link is busy, non-AP MLD STA 120d or AP MLD 110 can select another link that is available.

STAs 120a, 120b, and 120c can be non-MLD STAs (e.g., a STA with a single transceiver). Mobile AP STA 150 may communicate with AP MLD 110 via one of AP 112, AP 114, or AP 116, shown as communication 140b.

Mobile AP station 150 is different than a conventional mobile device that performs soft AP functions that enable other devices to access network 130, because a conventional mobile device performing soft AP functions cannot enter a power save mode. In contrast, mobile AP station 150 can be a mobile device that operates in an always-on soft AP mode that provides soft AP mode functions for enabling STA 120b and STA 120c to access network 130 via communications 155a and 155b, respectively. Mobile AP station 150 is also capable of switching back to infrastructure mode to operate as an associated station in an infrastructure mode with an AP (e.g., AP MLD 110.) For example, in an always-on soft AP mode, mobile AP station 150 can implement a TWT responder power save mode feature. Mobile AP station 150 can maintain a wake window after a beacon to enable unassociated devices (e.g., STA 120b, STA 120c) to associate; establish a broadcast TWT schedule for unassociated TWT-capable devices to associate; schedule a TWT service period (SP) for associated devices; go to sleep (or enter a lower power state) outside of the scheduled TWT SPs of the associated devices; and perform as a station and maintain a connection with an AP (e.g., to transmit infrastructure traffic to AP MLD 110.)

Non-AP MLD STAs 122, 124, 126, STAs 120a, 120b, 120c, 120d and/or mobile AP STA 150, can be electronic devices such as, but not limited to, a cellular phone, a smart phone, a tablet, a console device, a wearable device, or a laptop (or other mobile computing platform). In some embodiments, any of STA 120a-120c can be a legacy device that does not support RTS Enabled or UL MU-RTS Enabled capabilities. Network 130 can include, but is not limited to, any of or any combination of local area networks (LANs), metropolitan area networks (MANs), wireless local area networks (WLANs), satellite networks, and/or the Internet. In some embodiments, AP 110 may not be a MLD, where AP 110 may include a single transceiver.

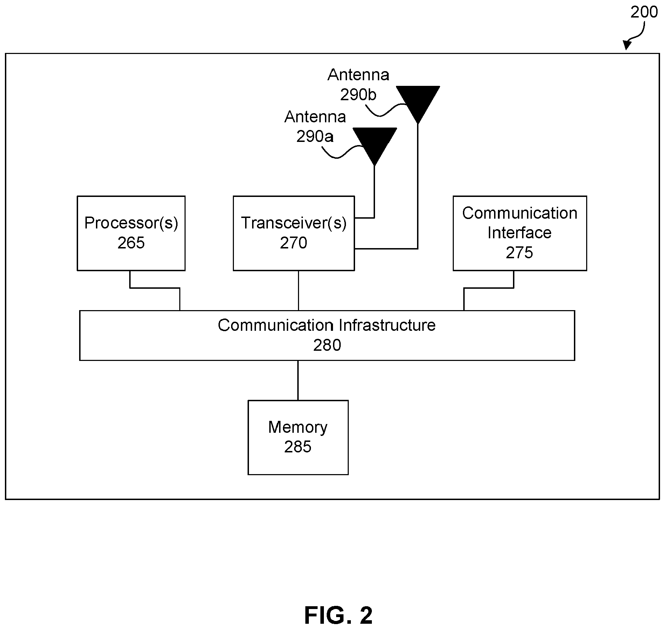

FIG. 2 illustrates a block diagram of example wireless system 200 for AP power save enhancements, according to some embodiments of the disclosure. For explanation purposes and not a limitation, FIG. 2 may be described with reference to elements from FIG. 1. For example, system 200 may be any of the electronic devices: AP MLD 110, AP 112, AP 114, AP 116, non-AP MLD STA 120d, STA 122, STA 124, STA 126, STA 120a-120c, or mobile AP STA 150 of system 100. System 200 includes one or more processors 265, transceiver(s) 270, communication interface 275, communication infrastructure 280, memory 285, and antenna 290. Memory 285 can include random access memory (RAM) and/or cache, and can include control logic (e.g., computer instructions) and/or data. One or more processors 265 can execute the instructions stored in memory 285 to perform operations enabling wireless system 200 to transmit and receive wireless communications, including the functions for AP power save enhancements herein. In some embodiments, one or more processors 265 can be "hard coded" to perform the functions described herein. Additionally or alternatively, one or more processors 265 can execute instructions to perform, or cause to be performed, any/all of the functions described herein. Transceiver(s) 270 transmits and receives wireless communications signals including wireless communications supporting AP power save enhancements, according to some embodiments, and can be coupled to one or more antennas 290 (e.g., 290a, 290b). In some embodiments, a transceiver 270a (not shown), of transceiver(s) 270, can be coupled to antenna 290a and different transceiver 270b (not shown) can be coupled to antenna 290b. Communication interface 275 allows system 200 to communicate with other devices that may be wired and/or wireless. Communication infrastructure 280 can be a bus or other such pathway. Antenna 290 can include multiple antennas that may be the same or of different types.

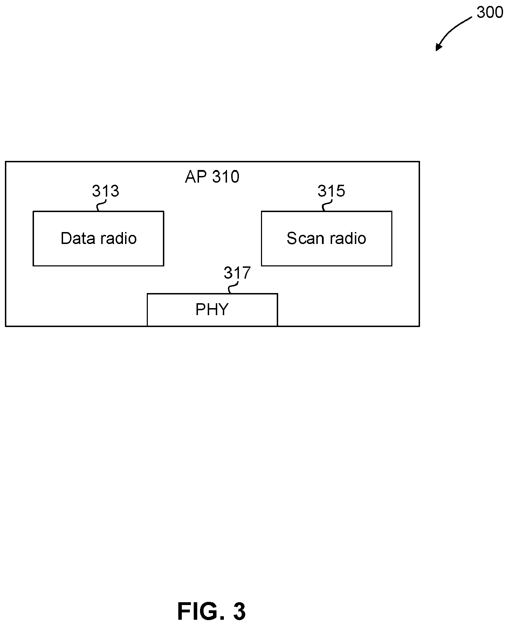

FIG. 3 illustrates example 300 of AP radios, according to some embodiments of the disclosure. For explanation purposes and not a limitation, FIG. 3 may be described with reference to elements from FIG. 1. For example, AP 310 can be any of the electronic devices: AP MLD 110, AP 112, AP 114, AP 116, or mobile AP STA 150 of system 100. AP 310 can include data radio 313 and scan radio 315 that are configured to communicate to a link via PHY 317 (e.g., a physical layer). In some embodiments, scan radio 315 can receive one or more 20 MHz bandwidth (BW) channels and can be implemented as receive-only. For example, scan radio 315 can be configured to receive at a rate of 6, 12, or 24 Mb/s. Data radio 313 can be configured to receive one or more channels having a bandwidth of 20-320 MHz, one or more spatial streams (SS), and multiple data rates (e.g., at various modulation coding schemes (MCSs). AP 310 can use the radios in different availability states, e.g., as shown below in Table 1.

**Table 1. AP Radio Use in Different Availability States**

| **Name** | **Description** | |
|---|---|---|
| Full power state | AP 310 has data radio 313 on with full receive and transmit capabilities operating on the link. | |
| Low power receive (LPR) state | AP 310 has scan radio 315 in use for the link. Data radio 313 is in warm sleep and AP 310 can activate data radio 313 in a short time, such as within a Short Interframe Spacing (SIFS), e.g., only for 20 MHz BW transmissions. | In another implementation, data radio 313 is configured to operate in 20 MHz BW, with 1SS and low MCSs. |
| Radio OFF | AP 310 has scan radio 315 and data radio 313 off (or in a lower power state) for the link. | |

When in a full power (or higher power) state, AP 310 experiences high power consumption and uses data radio 313 with full receive and transmit capabilities. In a LPR state, AP 310 can realize reduced power consumption. For example, AP 310 can operate with scan radio 315, while data radio 313 is in a warm sleep state. For example, the scan radio can receive UL MU-RTS and detect that the data radio should be activated. The data radio activation can be performed during the padding + SIFS duration, so the data radio can be available to send a CTS for UL MU-RTS. The data radio has its full transmission BW, NSS, etc. Accordingly, AP 310 can activate data ratio 313 in a SIFS, e.g., for 20 MHz BW transmission. In the LPR state, data radio 313 may be on, but configured to operate in a certain bandwidth, e.g., 20 MHz. In some implementations, data radio 313 can be configured to operate with one SS and/or with low MCS(s). In the radio OFF state, AP 310 can turn both scan radio 315 and data radio 313 off.

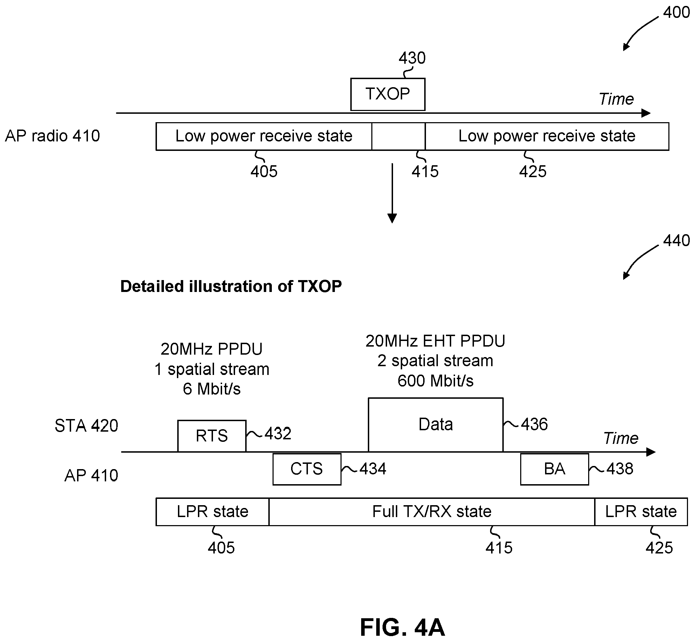

FIG. 4A illustrates examples 400 and 440 of power savings, according to some embodiments of the disclosure. For explanation purposes and not a limitation, FIG. 4A may be described with reference to elements from FIG. 1. For example, AP 410 can be any of the electronic devices: AP MLD 110, AP 112, AP 114, AP 116, or mobile AP STA 150 of system 100. STA 420 can be any of the electronic devices: non-AP MLD STA 120d, STA 122, STA 124, STA 126, STA 120a-120c, or mobile AP STA 150 of system 100. AP 410 can be a system 200 of FIG. 2. Example 400 shows that AP radio 410 can be in low power receive (LPR) state 405, can transition to full power state 415 for a transmit opportunity (TXOP) 430, and return to LPR state 425.

Example 440 provides additional details. For example, AP 410 can signal an RTS Enabled signal of value of 1 to require associated STAs (e.g., STA 420) to send an RTS frame (e.g., RTS 432) before sending during a TXOP (e.g., TXOP 430). RTS 432 can be received by AP 410 in LPR 405 state. For example, AP 410 can be configured to receive, e.g., a 20 MHz PPDU in 1 spatial stream (SS) at a low bit rate (e.g., a low MCS). After a Short Interframe Spacing (SIFS), AP 410 can transmit Clear to Send (CTS) 434 and transition to full power (or higher power) state 415, during which AP 410 can receive data 436. In some implementations, data 436 can be transmitted in a 20 MHz channel, but using multiple spatial streams and/or a higher bit rate (e.g., Extremely High Throughput (EHT), 2 SS, and 600 Mbit/s). After receiving data 436, AP 410 can transmit block acknowledgement (BA) 438 before transitioning to LPR state 425, e.g., to reduce power consumption. In examples 400 and 440, AP 410 receives data 436 on a 20 MHz BW channel, e.g., because transitioning to a higher bandwidth channel can require a longer duration than a SIFS.

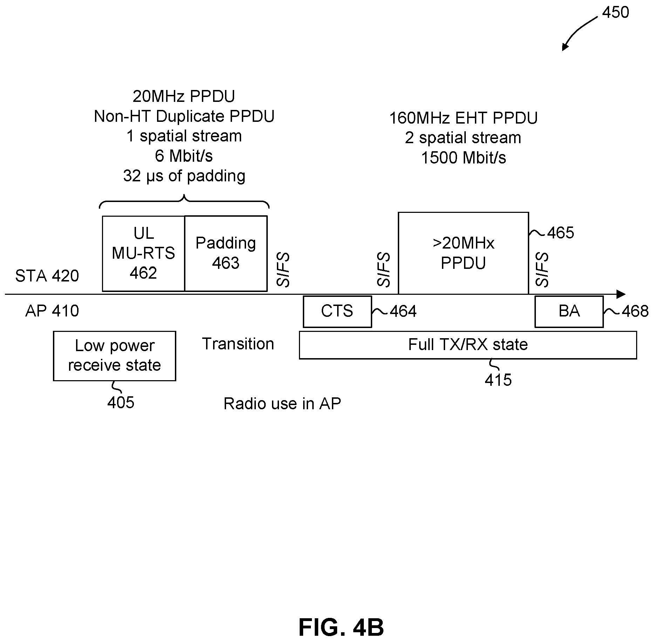

FIG. 4B illustrates example 450 of AP power save enhancements with an uplink (UL) multi-user (MU)-Request to Send (RTS) Enabled feature, according to some embodiments of the disclosure. For explanation purposes and not a limitation, FIG. 4B may be described with reference to elements from FIG. 1 and/or FIG. 2. For example, AP 410 can be any of the electronic devices: AP MLD 110, AP 112, AP 114, AP 116, or mobile AP STA 150 of system 100. STA 420 can be any of the electronic devices: non-AP MLD STA 120d, STA 122, STA 124, STA 126, STA 120a-120c, or mobile AP STA 150 of system 100. AP 410 and STA 420 can be a system 200 of FIG. 2.

Some embodiments include a UL MU-RTS Enabled capability that is an improvement over the RTS Enabled capability. The UL MU-RTS Enabled capability allows for a padding delay having a configurable length that can be longer than a SIFS. In some embodiments, the configurable length padding delay can be based on AP 410's capabilities, e.g., to provide enough time for AP 410, after receiving a UL MU-RTS frame, to transition to full power to communicate using larger BW channels, higher bit rates (e.g., higher MCSs), and/or a larger number of SSs (NSS).

For example, AP 410 can establish during association that UL MU-RTS Enabled field with a value of 1 signals that UL MU-RTS transmission is required. AP 410 can configure UL MU-RTS padding durations via association signaling. For example, the UL MU-RTS padding durations can be based on, or otherwise contemplate, AP 410's capabilities, e.g., including capabilities during LPR state operations. As an example and not a limitation, UL MU-RTS padding length can be configured to one of the following values: 0, 16, 32, 64, 128, or 256 µs. The AP 410 can communicate the same UL MU-RTS padding delay to all STAs.

In some embodiments, the mechanism can be used for one or more other UL frame types, in place of or in addition to UL MU-RTS frames. For instance, a QoS Null or a management frame with padding that solicits a control response from the AP.

In example 450, AP 410 has configured UL MU-RTS Enabled with value of 1 so that AP 410 operates in LPR state 405. While in LPR state 405, AP 410 receives from STA 420, UL MU-RTS frame 462. For example, UL MU-RTS frame 462 is received via a 20 MHz BW non-high throughput (HT) physical layer (PHY) Protocol Data Unit (PPDU) in 1 SS at 6 Mbits/s. In other instances, other configurations are possible. UL MU-RTS frame 462 can indicate that STA 420 requests a 160 MHz BW channel and UL MU-RTS frame 462 contains additional padding (e.g., payload at the end of the transmitted UL MU-RTS frame 462) to implement padding delay 463 duration (e.g., 32 µs.) During padding delay 463 and SIFS, AP 410 transitions from LPR state 405 to full power state 415, such that AP 410 is capable of receiving data 465 on a higher BW channel than 20 MHz, using higher NSS, and/or at a higher bit rate. AP 410 can transmit CTS 464 to STA 420 and receive data 465. For example, data 465 can be transmitted using a 160 MHz Extremely High Throughput (EHT) message with 2 SS, and a bit rate of 1500 Mbits/s. In other instances, other configurations are possible. AP 410 can also transmit BA 468 after receiving data 465.

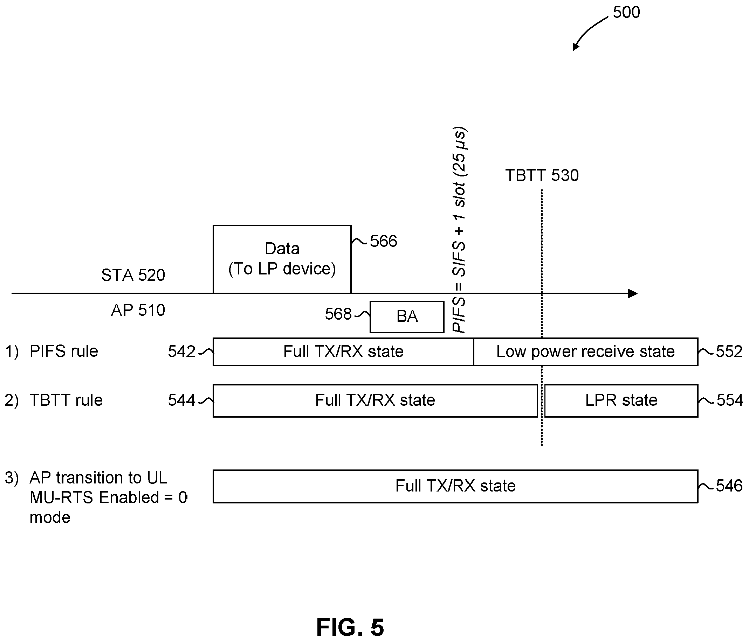

FIG. 5 illustrates example 500 for returning to a LPR state, according to some embodiments of the disclosure. For explanation purposes and not a limitation, FIG. 5 may be described with reference to elements from FIGS. 1 and/or 2. For example, AP 510 can be any of the electronic devices: AP MLD 110, AP 112, AP 114, AP 116, or mobile AP STA 150 of system 100. STA 520 can be any of the electronic devices: non-AP MLD STA 120d, STA 122, STA 124, STA 126, STA 120a-120c, or mobile AP STA 150 of system 100. AP 510 and STA 520 can be a system 200 of FIG. 2.

In some implementations, data 566 can correspond to data 465 of FIG. 4B and BA 568 can correspond to BA 468 of FIG. 4B. Some embodiments enable AP 510 to return to LPR state when UL MU-RTS Enabled value equals 1 (e.g., enabled). In example 500, when AP 510 is in full power state 542, STA 520 transmits data 566 to AP 510 and AP 510 transmits BA 568. In an example, AP 510 follows a Point Coordination Function (PCF) Interframe Space (PIFS) rule, where PIFS can equal SIFS+1 slot (or, e.g., 25 µs). After transmitting BA 568 in full power state 542, if AP 510 does not transmit a frame or receive a frame addressed to AP 510 after a PIFS, AP 510 can transition to LPR state 552. In an example, AP 510 follows a Target Beacon Transmission Time (TBTT) rule, after transmitting BA 568 in full power state 544, AP 510 can transition to LPR state 554 after a next beacon transmission (e.g., after TBTT 530). AP 510 may signal to one or more STAs (e.g., STA 520), e.g., via a beacon, that AP 510 is returning, or has returned, to LPR state 554. In another example, AP 510 may change a value of UL MU-RTS Enabled (e.g., change from value=1 to value=0). In such implementations, AP 510 stops requiring UL MU-RTS frames (e.g., fast AP 510 activation) and can remain in full power state 546 after transmitting BA 568 (and after TBTT 530). AP 510 can transmit a beacon signal indicating that UL MU-RTS Enabled has a value of 0 (e.g., disabled).

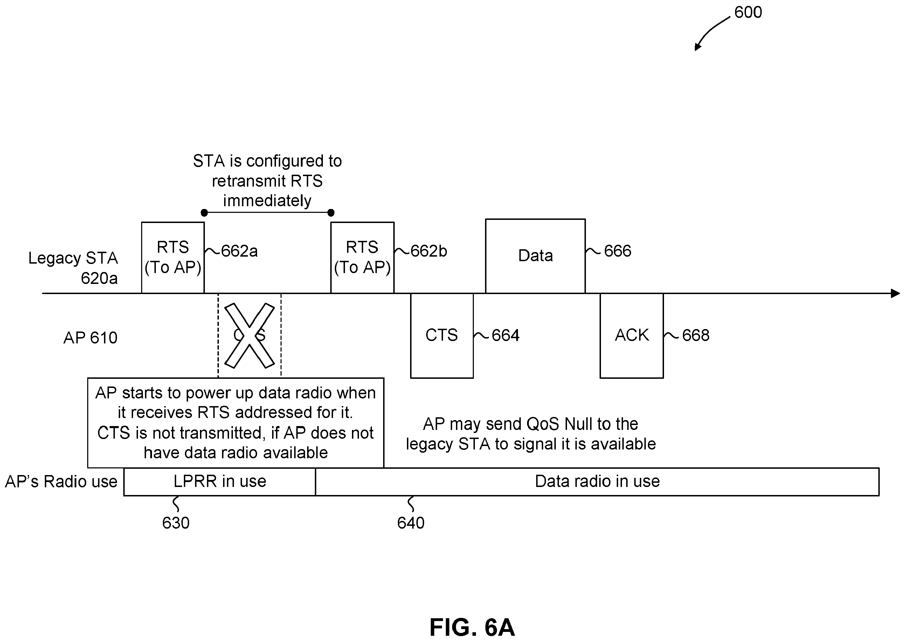

FIG. 6A illustrates example 600 of compatibility with legacy STA 620a, according to some embodiments of the disclosure. For explanation purposes and not a limitation, FIG. 6A may be described with reference to elements from FIGS. 1 and/or 2. For example, AP 610 can be any of the electronic devices: AP MLD 110, AP 112, AP 114, AP 116, or mobile AP STA 150 of system 100. Legacy STA 620a can be any of the electronic devices: STA 120a-120c of system 100. AP 610 and legacy STA 620a can be, or be part of, a system 200 of FIG. 2.

In some examples, legacy STA 620a can be an older STA (e.g., Wi-Fi 5 and older) that does not support an RTS Enabled feature, e.g., that configures the STA to transmit RTS frame as the first transmission of a TXOP, or UL MU-RTS Enabled features. Legacy STA 620a may transmit a frame that cannot be received by AP 610 when UL MU-RTS Enabled has a value of 1 (e.g., is enabled.) For example, AP 610 may not receive a frame for which the associated BW is larger than 20 MHz. To enable AP power save embodiments to work with legacy STA 620a, AP 610 can be configured to switch to a UL MU RTS Enabled value of 0 (e.g., disabled) when AP 610 detects one or more transmissions from a legacy STA (e.g., legacy STA 620a.) In some examples, legacy STA 620a can support an RTS Enabled feature (e.g., a Wi-Fi 6 STA or a STA that supports RTS Enablement). Legacy STA 620a can be configured to have an RTS Enabled value equal to 1 (e.g., enabled) or UL MU-RTS Enabled value equal to 1 (e.g., enabled.) Legacy STA 620a can be configured to retransmit RTS when legacy STA 620a does not receive a timely response from AP 610. For example, when AP 610 may be in the process of transitioning to full power state (e.g., activating data radio 313 of FIG. 3).

As shown in example 600, AP 610 has configured UL MU-RTS Enabled value equal to 1 (e.g., enabled) and is operating in LPR state 630 when RTS 662a is transmitted by Legacy STA 620a. AP 610 may detect RTS 662a addressed to AP 610, set UL MU-RTS Enabled value equal to 0 (e.g., disabled), and begin powering up data radio 313 to transition to full power state 640. When AP 610 does not yet have data radio 313 available, AP 610 does not transmit a CTS signal. Legacy STA 620a can retransmit a RTS message, shown as RTS 662b. In response to RTS 662b, AP 610 transmits CTS 664 and/or AP 610 transmits a QoS Null to legacy STA 620a to signal the availability of AP 610. Legacy STA 620a can transmit data 666 and, in response to receiving data 666, AP 610 can transmit ACK 668.

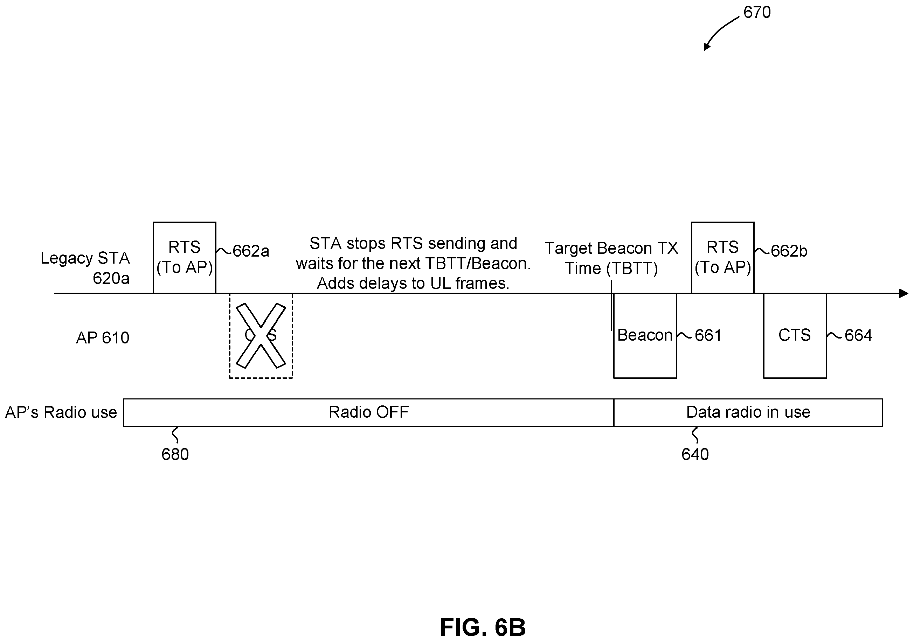

FIG. 6B illustrates example 670 of AP power save enhancements supporting compatibility with a legacy STA, according to some embodiments of the disclosure. FIG. 6B may be described with reference to elements from FIGS. 1 and/or 2. For example, AP 610 can be any of the electronic devices: AP MLD 110, AP 112, AP 114, AP 116, or mobile AP STA 150 of system 100. Legacy STA 620a can be any of the electronic devices: STA 120a-120c of system 100. AP 610 and/or legacy STA 620a can be, or can be part of, a system 200 of FIG. 2.

In some examples, AP 610 can operate in accordance with a proprietary power save scheme in which AP 610 can skip the remainder period of a beacon period. Thus, after sending an RTS signal, legacy STA 620a can wait for a next beacon before retransmitting the RTS signal. In some examples, legacy STA 620a can go to sleep (or a lower power state) and wake up (or return to a higher power state) at, or prior to, the next beacon to retransmit the RTS signal. As shown in example 670, AP 610's radio is in OFF state 680 when legacy STA 620a transmits RTS 662a to AP 610. When legacy STA 620a does not receive a CTS from AP 610, legacy STA 620 waits for a next TBTT/beacon. In conjunction with the next TBBT, AP 610 transitions to full power state 640 and uses data radio 313 to transmit beacon 661. After beacon 661, legacy STA 620a transmits RTS 662b to AP 610 and AP 610 responds with CTS 664 to legacy STA 620a. The operations of example 670 may delay UL frame transmission, but also can enable AP 610 and/or legacy STA 620a to reduce power consumption.

In some embodiments, AP 610 signals to legacy STA 620a that AP 610 uses low power receive radio (e.g., UL MU-RTS Enabled value of 1 (e.g., enabled)), or signal that AP 610 will be available after one or more rounds of RTS transmissions. In some examples, AP 610 can send a frame to legacy STA 620a when AP 610 is available. In some examples, legacy STA 620a can continue to send RTS frames (e.g., to retransmit RTS according to Enhanced Distributed Channel Access (EDCA) retransmission rules or after a PIFS interval (e.g., 25µs)).

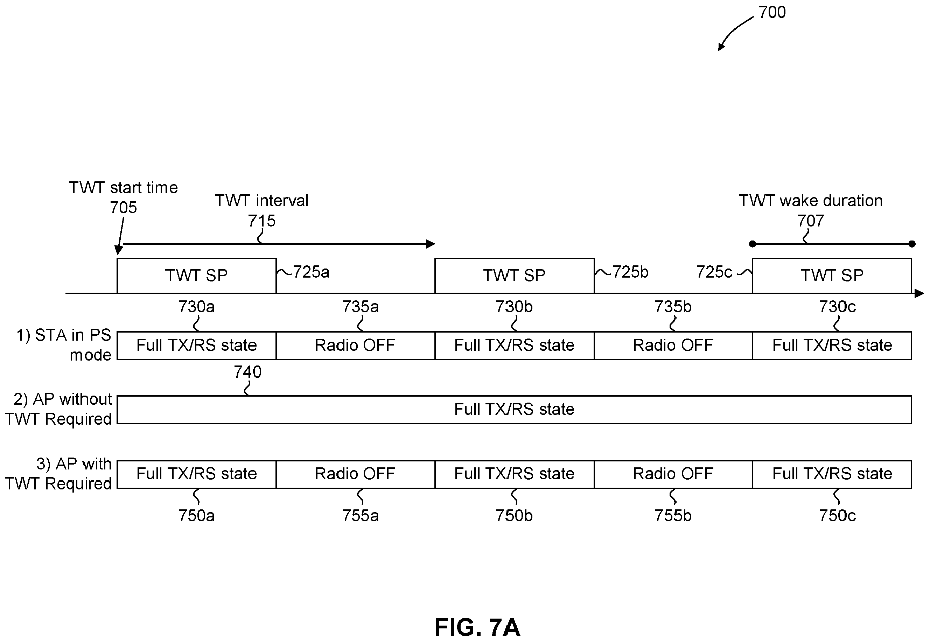

FIG. 7A illustrates example 700 of a TWT SP, according to some embodiments of the disclosure. For explanation purposes and not as a limitation, FIG. 7A may be described with reference to elements from FIGS. 1 and/or 2. For example, the AP can be any of the electronic devices: AP MLD 110, AP 112, AP 114, AP 116, or mobile AP STA 150 of system 100. The STA can be any of the electronic devices: non-AP MLD STA 120d, STA 122, STA 124, STA 126, STA 120a-120c, or mobile AP STA 150. The AP and/or the STA can be, or can be part of, system 200 of FIG. 2.

In example 700, TWT SP start time 705 marks the start of TWT SP 725a, and subsequent TWT SP 725b begins at the end of TWT interval 715. TWT wake duration 707 indicates when devices (e.g., a STA and/or an AP) are in a full power state, namely, for the length of a TWT SP (e.g., TWT SP 725c.) Some embodiments enable a STA and/or an AP to turn radios off when the AP has no transmissions or only periodic transmissions. In some embodiments the AP can set a TWT Required feature (e.g., a value equal to 1) indicating that the AP is available only during TWT SPs. The TWT Required feature can be used to implement AP power save or to prevent operation during times that the AP may not be available (e.g., during Bluetooth^{™} transmissions or to reduce interference.) Thus, by implementing the TWT Required feature, an AP can be configured to be partially available, while conserving power when the radios are turned off (or in a lower power state).

Case 1) STA in power save (PS) mode. In example 700, the STA can be STA 120b of FIG. 1 that enters full power states 730a, 730b, and 730c during TWT SP 725a, 725b, and 725c, respectively, to communicate with the AP (e.g., mobile AP STA 150). To conserve power, STA 120b can turn radios off (or to a lower power state) during one or more other intervals, such as radio OFF states 735a and 735b, outside of a TWT SP.

Case 2) AP without TWT Required. In some examples, when TWT Required value equals 0 (disabled), an AP is always on in full power state 740.

Case 3) AP with TWT Required. The AP with TWT Required value equal to 1 (enabled) can be, e.g., mobile AP STA 150 of FIG. 1 that communicates with STA 120b during TWT SP 725a in full power state 750a, and transitions to radio OFF state 755a outside of a TWT SP (e.g., turns off data radio 313 when communicating via Bluetooth^{™} transmissions with STA 120c). During TWT SP 725b, Mobile AP STA 150 can transition to full power state 750b to communicate with STA 120b and return to radio OFF state 755b outside of a TWT SP. Mobile AP STA 150 can return to full power state 750c during TWT SP 725c.

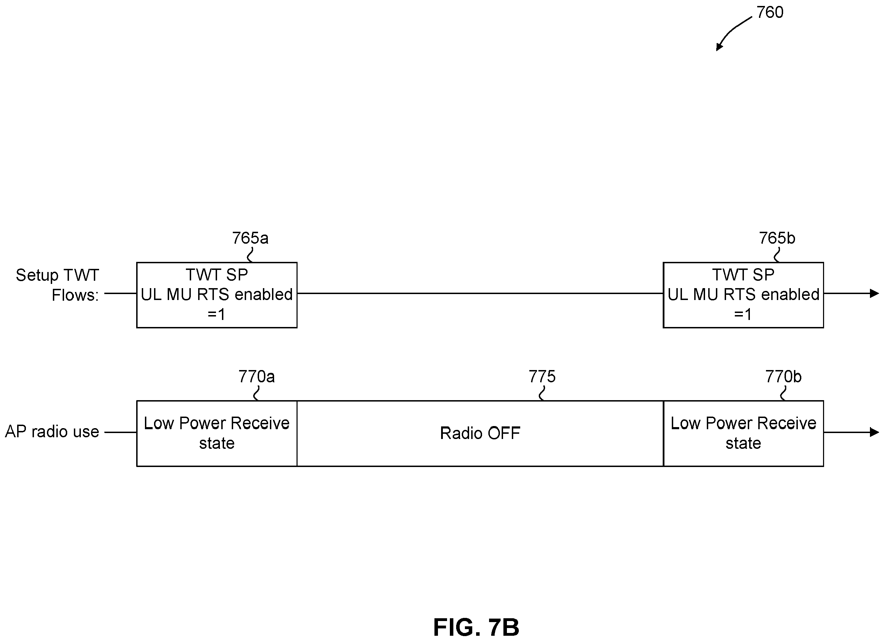

FIG. 7B illustrates example 760 of AP power save enhancements with TWT Required and UL MU-RTS Enabled features, according to some embodiments of the disclosure. For explanation purposes and not as a limitation, FIG. 7B may be described with reference to elements from FIGS. 1 and/or 2. For example, the AP can be any of the electronic devices: AP MLD 110, AP 112, AP 114, AP 116, or mobile AP STA 150 of system 100. The STA can be any of the electronic devices: non-AP MLD STA 120d, STA 122, STA 124, STA 126, STA 120a-120c, or mobile AP STA 150. The AP and/or the STA can be, or be part of, system 200 of FIG. 2. As described in example 700, an AP can reduce power consumption by signaling a TWT Required value equal to 1 and operating in a full power state during a TWT SP, while be configured in a radio OFF state at one or more other times. An AP can reduce power consumption even further by signaling UL MU-RTS Enabled value equal to 1 and operating in an LPR state during a TWT SP, while be configured in a radio OFF state at one or more other times.

Example 760 illustrates a setup TWT flow in which TWT SP 765a and TWT SP 765b represent a scenario in which TWT Required value equals 1 and UL MU-RTS Enabled value equals 1. Accordingly, the AP radio operates in LPR state 770a during TWT SP 765a, changes to radio OFF state 755 outside of a TWT SP, and changes to LPR state 770b during TWT SP 765b.

AP availability and power consumption are shown in Table 2 below with the assumptions that a TWT Required field value equal to 1 assumes the AP is available for 5 ms in each 100 ms beacon interval.

**Table 2. AP Availability and Power Consumption**

| AP Availability | AP Radio Use | AP Signaling | Description |
|---|---|---|---|
| Full availability | 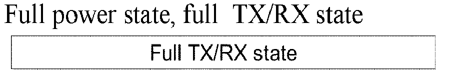 | UL MU-RT S Enabled field value= 0, TWT Required field value=0 | AP receives at all times with the maximum supported BW, NSS and MCS |
| Low Power Receive (LPR) | 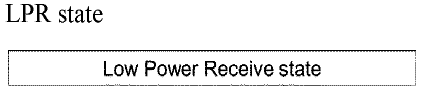 | UL MU-RT S Required field value= 1, TWT Required field value=0 | AP receives at all times in LPR state; UL MU-RTS frame activates AP to full power RX state. |
| Available only during TWT SP | 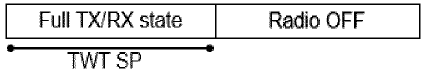 | TWT Required field value=1 | AP may be unavailable outside of the TWT SP. |
| Available only during TWT SP where TWT UL MU-RTS Enabled value=1 | 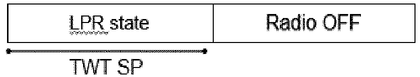 | TWT flow has setting of TWT UL MU-RT S Enabled field value =1, TWT Required field value=1 | AP may be unavailable outside of a TWT SP; and in LPR state during the TWT SP |

The first row indicates that when the AP is fully available, the AP radio (e.g., data radio 313 of FIG. 3) is in a full power state. UL MU-RTS Enabled feature and TWT Required feature are not active (e.g., UL MU-RTS Enabled field value equals 0, TWT Required field value equals 0). Accordingly, the AP can receive at all times at up to the maximum supported BW, NSS, and MCS, according to the capabilities of the AP.

The second row indicates that when the AP is in the LPR availability configuration, the AP radio (e.g., data radio 313 of FIG. 3) is in the LPR state. UL MU-RTS Enabled feature may be active, but TWT Required features are not active (e.g., UL MU-RTS Enabled field value equals 1, TWT Required field value equals 0). Accordingly, the AP can receive at all times in the LPR state. Receipt of a UL MU-RTS frame from a STA activates (or triggers) the AP to transition, e.g., during the padding delay time, to a full power state. While in the full power state, the AP can receive at up to the maximum supported BW, NSS, and MCS, based on the capabilities of the AP.

The third row indicates that the AP is available only during a TWT SP and that radios are turned off while not in a TWT SP. During the TWT SP, the AP radio (e.g., data radio 313 of FIG. 3) is in a full power state. The UL MU-RTS Enabled feature may not be available (or active), but the TWT Required feature is active (e.g., UL MU-RTS Enabled field value equals 0, TWT Required field value equals 1). Accordingly, the AP can receive during a TWT SP in a full power state and can be unavailable outside of a TWT SP. While in the full power state, the AP can receive at up to the maximum supported BW, NSS, and MCS, based on the capabilities of the AP.

The fourth row indicates that the AP is available only during a TWT SP in which UL MU-RTS Enabled is active (e.g., set to a value of 1), and is in a radio OFF state outside of the TWT SP. Further, during the TWT SP, the AP has LPR availability in which the AP radio (e.g., data radio 313 of FIG. 3) is in an LPR state. The UL MU-RTS Enabled feature and TWT Required features are active (e.g., UL MU-RTS Enabled field value equals 1 and TWT Required field value equals 1.) In addition, the AP has configured a TWT flow in which a TWT SP is configured with the TWT UL MU-RTS Enabled feature enabled (e.g., value equals 1 to signify enabled). Accordingly, the AP can receive at all times in an LPR state during a TWT SP. Receipt of a UL MU-RTS frame from a STA during the TWT SP activates (or triggers) the AP to transition, e.g., during the padding delay time, to full power state. While in the full power state, the AP can receive at up to the maximum supported BW, NSS, and MCS, based on the capabilities of the AP. Outside of the TWT SP, the radios are in the radio OFF state.

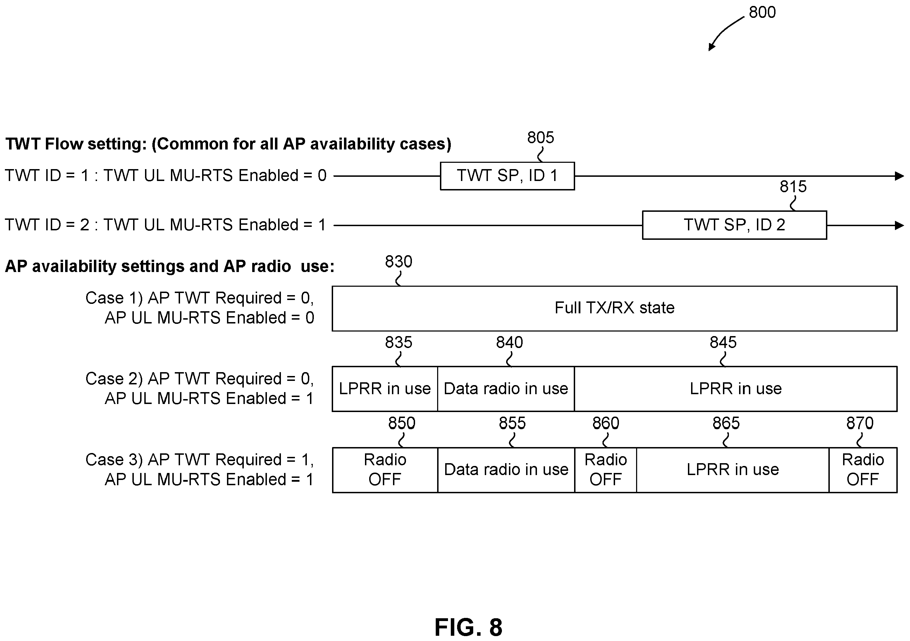

FIG. 8 illustrates example 800 showing availability settings and AP radio use associated with AP power save enhancements, according to some embodiments of the disclosure. For explanation purposes and not as a limitation, FIG. 8 may be described with reference to elements from FIGS. 1 and/or 2. For example, the AP can be any of the electronic devices: AP MLD 110, AP 112, AP 114, AP 116, or mobile AP STA 150 of system 100. The AP can communicate with a STA that can be any of the electronic devices: non-AP MLD STA 120d, STA 122, STA 124, STA 126, STA 120a-120c, or mobile AP STA 150. The AP and/or the STA can be, or can be part of, system 200 of FIG. 2.

The AP can configure a TWT SP to support TWT UL MU-RTS Enabled features by configuring one or more TWT flow settings. For example, the AP can configure the TWT UL MU-RTS Enabled feature (e.g., value equals 1 to signify enabled and value equals 0 to signify disabled) to implement the TWT UL MU-RTS AP power enhancement feature during a TWT SP. In some embodiments, the values can be reversed (e.g., value equals 0 to signify enabled and value equals 1 to signify disabled). In other words, some aspects include support for UL MU-RTS (e.g., UL MU-RTS support in an AP) that is independent from a TWT SP, and some aspects include UL MU-RTS support during a TWT SP.

In some embodiments, a STA can transmit a UL MU-RTS frame in a TWT SP when the AP has signaled the following: i) AP conditions: TWT Required value equals 1 or UL MU-TRS Enabled value equals 1; and ii) The TWT flow settings for a TWT SP are configured to indicate that TWT UL MU-RTS Enabled is true (e.g., value=1). In some embodiments, a STA transmits a UL MU-RTS frame during a TWT SP if all ongoing TWT SPs require a TWT UL MU-RTS frame transmission.

In example 800, no transmissions from an AP occur during a TWT SP. TWT flow settings include two TWT SPs with different settings: TWT SP ID1 805 is configured with a TWT UL MU-RTS Enabled value equal to 0 (e.g., disabled) and TWT SP ID2 815 is configured with a TWT UL MU-RTS Enabled value equal to 1 (e.g., enabled). These TWT SP settings apply to cases 1-3 described below.

Case 1 indicates the settings for an AP with AP power save enhancement settings as follows: TWT Required value equals 0 (e.g., disabled) and UL MU-RTS Enabled value equals 0 (e.g., disabled). Accordingly, the AP remains in full power state 830 (e.g., data radio 313 in use) for full Transmit (TX)/Receive (RX) availability. In other words, the AP's power state does not change during TWT SP ID1 805 or TWT SP ID2 815.

Case 2 indicates the settings for an AP with AP power save enhancement settings as follows: TWT Required value equals 0 (e.g., disabled) and UL MU-RTS Enabled value equals 1 (e.g., enabled). The AP stays in LPR state 835 (e.g., LPR radio (LPRR) in use state) conserving power until TWT SSP ID1 805. Then, the AP transitions to full power state 840 (e.g., data radio 313 in use) for full TX/RX availability. After TWT SSP ID1 805 ends, the AP returns to LPR state 845, including through TWT SP ID2 815.

Case 3 indicates the settings for an AP with AP power save enhancement settings as follows: TWT Required value equals 1 (e.g., enabled) and UL MU-RTS Enabled value equals 1 (enabled). The AP is in radio OFF state 850, conserving power until TWT SP ID1 805. Then, the AP transitions to full power state 855 (e.g., data radio 313 in use) for full TX/RX availability. After TWT SP ID1 805, the AP transitions to radio OFF state 860. At TWT SP ID2 815, the AP transitions to LPR state 865. After TWT SP ID2 815, the AP transitions to radio OFF state 870. Accordingly, the most AP power reduction (e.g., power savings) occurs in case 3.

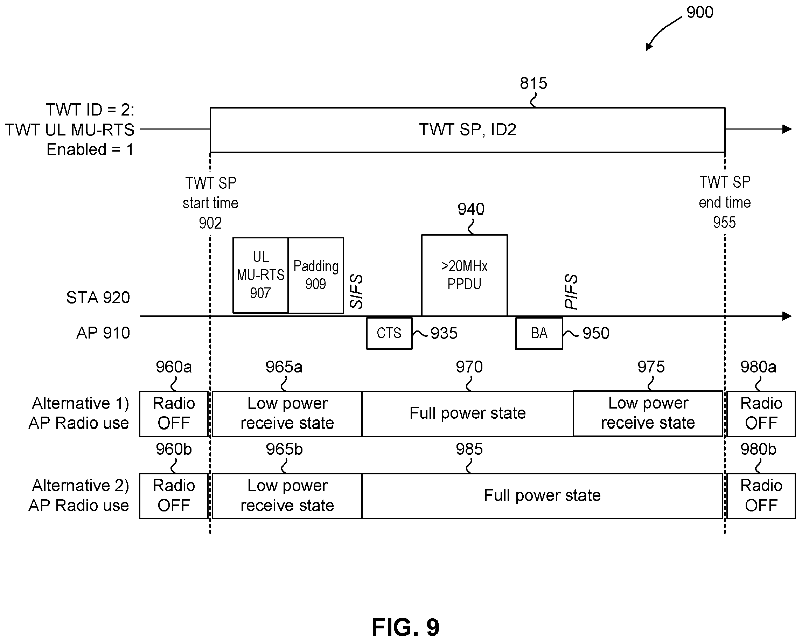

FIG. 9 illustrates more detailed example 900 showing availability settings and AP radio use with AP power save enhancements, according to some embodiments of the disclosure. For explanation purposes and not as a limitation, FIG. 9 may be described with reference to elements from FIGS. 1 and/or 2. For example, AP 910 can be any of the electronic devices: AP MLD 110, AP 112, AP 114, AP 116, or mobile AP STA 150 of system 100. AP 910 can communicate with STA 920, which can be any of the electronic devices: non-AP MLD STA 120d, STA 122, STA 124, STA 126, STA 120a-120c, or mobile AP STA 150. AP 910 and/or STA 920 can be, or can be part of, a system 200 of FIG. 2.

For explanation purposes and not as a limitation, the TWT SP for example 900 can correspond to case 3 of FIG. 8. For example, TWT SP start time 902 can correspond to the start of TWT SP ID2 815 of FIG. 8, and TWT SP end time 955 can correspond to the end of TWT SP ID2 815 of FIG. 8. For example, radio OFF states 960a and 960b may refer to 860, and radio OFF states 980a and 980b may refer to 870. When a TWT SP has a TWT UL MU-RTS Enabled value equal to 1 (e.g., enabled) like TWT SP ID2 815, then the TWT SP has alternatives 1 and 2 described below for UL MU-RTS frame transmissions.

Alternative 1 corresponds to a UL MU-RTS frame being transmitted by STA 920 before a UL TXOP. In other words, AP 910 follows a PIFS rule. AP 910 is in radio OFF state 960a until TWT SP start time 902 when AP 910 transitions to LPR state 965a. During LPR state 965a, AP 910 can listen and detect UL MU-RTS frame 907 followed by padding delay 909. During padding delay 909 and a SIFS, AP 910 transitions to full power state 970. AP 910 transmits CTS 935 to STA 920. In some embodiments, AP 910 can transmit CTS 935 prior to or during the transition to full power state 970. AP 910 can receive data 940, including one or more of receiving at a BW greater than 20 MHz, a high NSS, and/or a high MCS (e.g., up to maximum capabilities of AP 910). After transmitting BA 950, if no transmissions to/from AP 910 occur before a PIFS occurs, then AP 910 transitions to LPR state 975. If AP 910 has downlink (DL) data to send to STA 920 (in Alternative 1), then AP 910 remains in a full power state and transmits the DL frames during the TWT SP ID2 815. If a transmission to/from AP 910 occurs before a PIFS, STA 920a can transmit another UL MU-RTS frame (not shown) before the UL TXOP, prior to TWT SP end time 955. After TWT SP end time 955, AP 910 transitions to radio OFF state 980a (e.g., turns off data radio 313).

Alternative 2 describes an example in which a maximum of one UL MU-RTS frame is transmitted by STA 920 per TWT SP. UL MU-RTS frame 907 is transmitted by STA 920 only when STA 920 has not detected the availability of AP 910. AP 910's availability may be detected by STA 920 based on earlier consecutive TWT SPs. One or more frames transmitted by AP 910 signals availability of AP 910. For instance, AP 910 can send a CTS frame as a response to a UL MU-RTS frame, AP 910 can send a Block Acknowledgment (Block ACK) as a response to a UL data frame, or AP 910 can send a DL data frame. Other frame types also can signal availability of AP 910.

In Alternative 2, AP 910 is in radio OFF state 960b until TWT SP start time 902, when AP 910 transitions to LPR state 965b. During LPR state 965b, AP 910 can listen and detect UL MU-RTS frame 907 followed by padding delay 909. During padding delay 909 and/or a SIFS, AP 910 can transition to full power state 985. AP 910 transmits CTS 935 to STA 920. In some embodiments, AP 910 can transmit CTS 935 prior to the transition to full power state 985. AP 910 can receive data 940, including one or more of receiving at a BW greater than 20 MHz, a high NSS, and/or a high MCS (e.g., up to maximum capabilities of AP 910). After transmitting BA 950, AP 910 remains in full power state 985 until TWT SP end time 955. Thus, STA 920a can transmit additional data and receive corresponding acknowledgements (not shown) before the TWT SP ends. Similarly, the STA 920a may receive DL data frames from the AP during the TWT SP. After TWT SP end time 955, AP 910 transitions to radio OFF state 980b (e.g., turns off data radio 313).

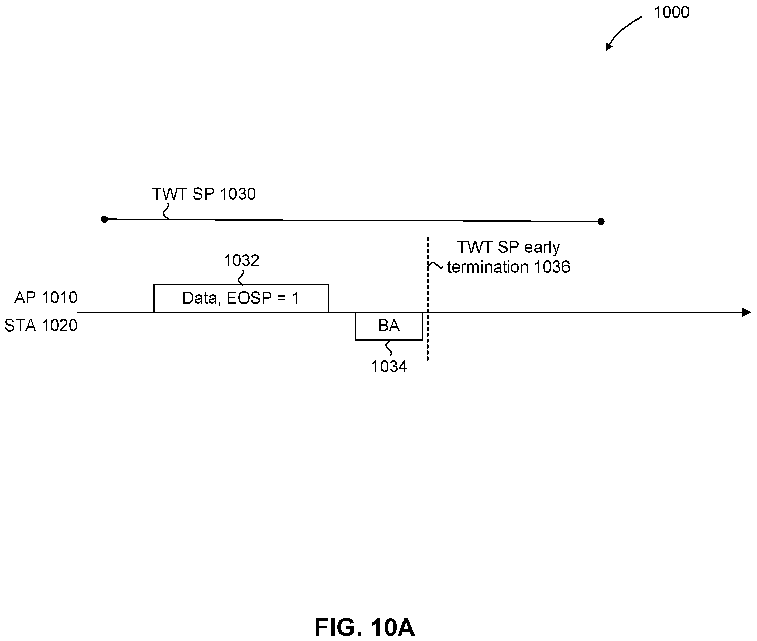

FIG. 10A illustrates example 1000 of early termination, according to some embodiments of the disclosure. For explanation purposes and not as a limitation, FIG. 10A may be described with reference to elements from FIGS. 1 and/or 2. For example, AP 1010 can be any of the electronic devices: AP MLD 110, AP 112, AP 114, AP 116, or mobile AP STA 150 of system 100. AP 1010 can communicate with STA 1020, which can be any of the electronic devices: non-AP MLD STA 120d, STA 122, STA 124, STA 126, STA 120a-120c, or mobile AP STA 150. AP 1010 and/or STA 1020 can be, or can be part of, a system 200 of FIG. 2. Example 1000 illustrates that AP 1010 can cause early termination of TWT SP 1030 and stop all ongoing TWT SPs (not shown). Examples of TWT SP termination signaling include AP 1010 sending a data frame 1032 (or QoS frame) with End of Service Period (EOSP) field value equal to 1. AP 1010 receives BA 1034 from STA 1020 and AP 1010 causes early termination of TWT SP 1030 at TWT SP early termination 1036. After TWT SP early termination 1036, AP 1010 will not send more frames to STA 1020 during the remainder of TWT SP 1030.

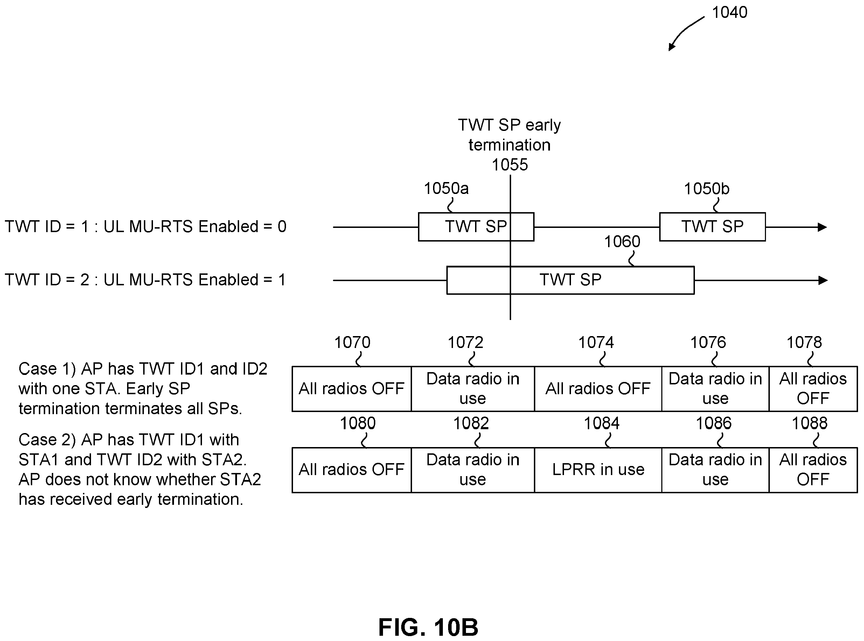

FIG. 10B illustrates example 1040 of AP power save enhancements with early termination, according to some embodiments of the disclosure. For explanation purposes and not as a limitation, FIG. 10B may be described with reference to elements from FIGS. 1 and/or 2. For example, the AP can be any of the electronic devices: AP MLD 110, AP 112, AP 114, AP 116, or mobile AP STA 150 of system 100. The AP can communicate with a STA that can be any of the electronic devices: non-AP MLD STA 120d, STA 122, STA 124, STA 126, STA 120a-120c, or mobile AP STA 150. The AP and/or STA can be, or can be part of, a system 200 of FIG. 2. In some embodiments, an AP utilizing power save enhancements can set all of the AP radios in a radio OFF state when the AP has initiated early termination of all ongoing TWT SPs. The AP can require confirmation that the STAs have received the TWT SP early termination signaling. In some embodiments, the AP may use one or more broadcast addressed frames to terminate a TWT SP for all STAs (or for one or more broadcast groups of STAs). The AP can send a Trigger Frame with more Trigger Frames with value=0, and not allocate resource units (RUs) for the STAs, thereby terminating one or more SPs for multiple STAs. Such a Trigger Frame can signal to the STAs which did not get an RU allocation that the SP is terminated. Those stations that did not get an RU allocation may return to a doze state. In some embodiments, the AP can transmit a Unicast Frame with an End of Service Period field value set to1 to cause early termination of one or more ongoing SPs, e.g., with the receiving STA.

In example 1040, TWT flow settings include two TWT SPs having different settings: TWT SP ID1 1050a and 1050b are configured with TWT UL MU-RTS Enabled value equal to 0 (e.g., disabled), and TWT SP ID2 1060 is configured with TWT UL MU-RTS Enabled value equal to 1 (e.g., enabled). These TWT SP settings apply to cases 1 and 2 described below.

In case 1, the AP has two TWT SPs configured with one STA: TWT SP ID1 1050a (and 1050b) and TWT SP ID2 1060. The AP can be in radio OFF state 1070 and can transition (e.g., data radio 313) to full power state 1072 in conjunction with the beginning of TWT SP ID1 1050a. The AP remains in full power state 1072 when TWT SP ID2 1060 begins, e.g., since the AP remains in the highest availability mode required of the two overlapping TWT SPs. Since both TWT SPs (e.g., TWT SP ID1 1050a (and 1050b) and TWT SP ID2 1060) are associated with the same STA, the AP can send a signal to cause TWT SP early termination 1055 of both TWT SPs 1050a and 1060. Subsequently, the AP can transition to radio OFF state 1074 until a next TWT SP, e.g., TWT SP ID1 1050b, at which time the AP transitions the data radio(s) to full power state 1076. After TWT SP ID1 1050b, the AP can turn the radios off and return to radio OFF state 1078.

In case 2, the AP has two TWT SPs, each configured with a different STA: TWT SP ID1 1050a (and 1050b) are configured with STA1 and TWT SP ID2 1060 is configured with STA2. The AP can be in radio OFF state 1080 and can transition (e.g., data radio 313) to full power state 1082 in conjunction with the beginning of TWT SP ID1 1050a. The AP can remain in full power state 1072 when TWT SP ID2 1060 begins, since the AP remains in the highest availability mode required of the two overlapping TWT SPs. In this example, the AP can transmit a signal to each of STA1 and STA2 requesting or indicating early termination. In example 1040, the AP receives confirmation (e.g., a BA signal) from STA1, but not from STA2. Accordingly, at TWT SP early termination 1055, the AP will remain in LPR state 1084 rather than turning the radios off, because the AP remains in the highest availability mode required by the two overlapping TWT SPs. When TWT SP ID1 1050b begins, the AP transitions to full power state 1086 to satisfy the highest availability mode required by the overlapping TWT SPs. After TWT SP ID1 1050b ends, the AP can transition to radio OFF state 1088.

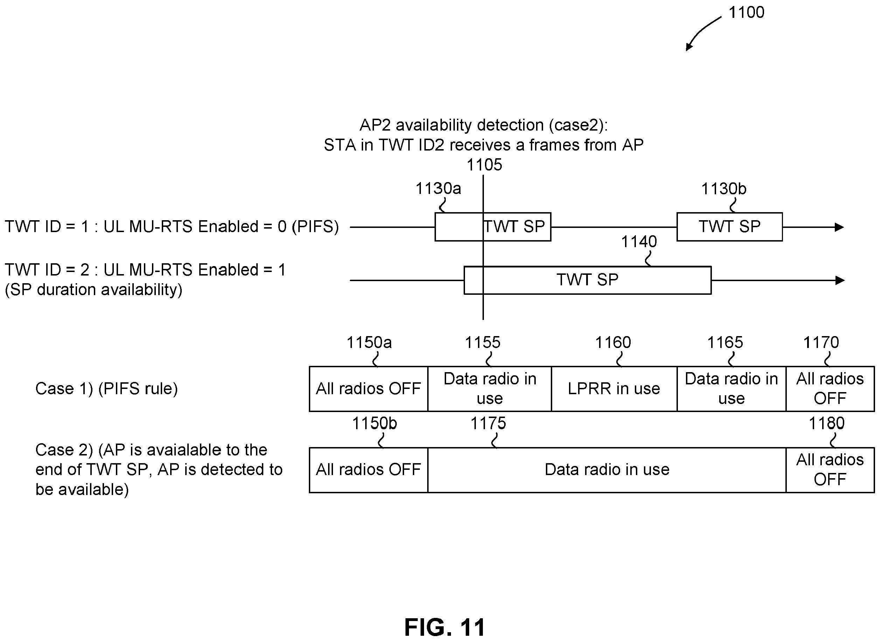

FIG. 11 illustrates example 1100 of AP power save enhancements with overlapping TWT SPs, according to some embodiments of the disclosure. For explanation purposes and not as a limitation, FIG. 11 may be described with reference to elements from FIGS. 1 and/or 2. For example, the AP can be any of the electronic devices: AP MLD 110, AP 112, AP 114, AP 116, or mobile AP STA 150 of system 100. The AP can communicate with a STA that can be any of the electronic devices: non-AP MLD STA 120d, STA 122, STA 124, STA 126, STA 120a-120c, or mobile AP STA 150. The AP and/or STA can be, or can be part of, a system 200 of FIG. 2.

Example 1100 illustrates that when an AP with power saving enhancements supports overlapping TWT SPs, the AP operates in the state with the highest availability required by either of the overlapping TWT SPs. Further, when the AP is detected to be further available during the overlap, the AP can remain in the highest availability required state. In example 1100, TWT flow settings include two TWT SPs with different settings: TWT SP ID1 1130a and 1130b are configured with TWT UL MU-RTS Enabled value equal to 0 (e.g., disabled), and TWT SP ID2 1140 is configured with TWT UL MU-RTS Enabled value equal to 1 (e.g., enabled). These TWT SP settings apply to cases 1-2 described below.

In some embodiments, the AP follows the PIFS rule such that when, after transmitting a BA, no transmissions are received or sent before a PIFS, the AP transitions back to a LPR state, as described in case 1. However, when a transmission is received or sent before a PIFS, the AP remains in the highest availability state required of the overlapping TWT SPs, as described in case 2. In example 1100, the AP can transmit TWT Required value equal to 1 (e.g., enabled) in one or more of the AP's beacons. Accordingly, the AP operates only during TWT SPs.

Case 1 shows that the AP can be in radio OFF state 1150a and transition (e.g., data radio 313) to full power state 1155 in conjunction with the beginning of TWT SP ID1 1130a. After a PIFS, during TWT SP ID1 1130a, the AP transitions to LPR state 1160 instead of transitioning to a radio OFF state, because of the overlap with TWT SP ID2 1140. When TWT SP ID1 1130b begins, an overlap still remains, and the AP transitions to full power state 1165. After TWT SP ID1 1130b ends, the AP transitions to radio OFF state 1170.

Case 2 shows that the AP can be in radio OFF state 1150b and transition (e.g., data radio 313) to full power state 1175 when TWT SP ID1 1130a begins. The AP remains in full power state 1175 when TWT SP ID2 1140 begins. The AP can communicate with a STA in TWT SP ID2 1140 and send a BA after receiving data from the STA. Before a PIFS passes during TWT SP ID2 1140, the AP can communicate with (e.g., transmit a frame to) the STA. Since the STA can determine at 1105 from the communication that the AP is still available, the STA can continue to communicate (TX/RX) with the AP during TWT SP ID2 1140 and the AP remains in full power state 1175. When TWT SP ID1 1130b begins, the AP remains in full power state 1175. After TWT SP ID1 1130b ends, the AP can transition to radio OFF state 1180.

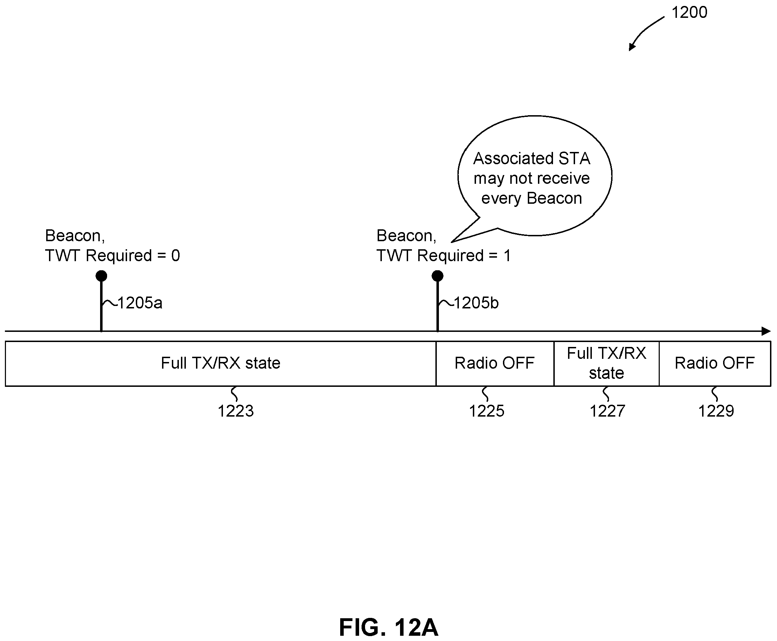

FIG. 12A illustrates example 1200 of lower power change signaling, according to some embodiments of the disclosure. For explanation purposes and not as a limitation, FIG. 12A may be described with reference to elements from FIGS. 1 and/or 2. For example, the AP can be any of the electronic devices: AP MLD 110, AP 112, AP 114, AP 116, or mobile AP STA 150 of system 100. The AP can communicate with a STA that can be any of the electronic devices: non-AP MLD STA 120d, STA 122, STA 124, STA 126, STA 120a-120c, or mobile AP STA 150. The AP and/or STA can be, or can be part of, a system 200 of FIG. 2.

Example 1200 illustrates problems with quickly reducing the availability of an AP. STAs obtain one or more AP parameter values from beacons received. For example, an AP transmits beacon 1205a with a TWT Required value equal to 0 and operates in full power state 1223. When the AP transmits beacon 1205b with a TWT Required value equal to 1, the AP can change to radio OFF state 1225 and may not be able to receive subsequent transmissions from any STAs. The AP may subsequently return to full power state 1227 and then transition to radio OFF state 1229. A problem may occur when a STA does not receive every beacon. If a STA missed beacon 1205b, the STA may transmit at one or more times when the AP is not available (e.g., during radio OFF state 1225). This could result in poor interoperability and/or frame loss.

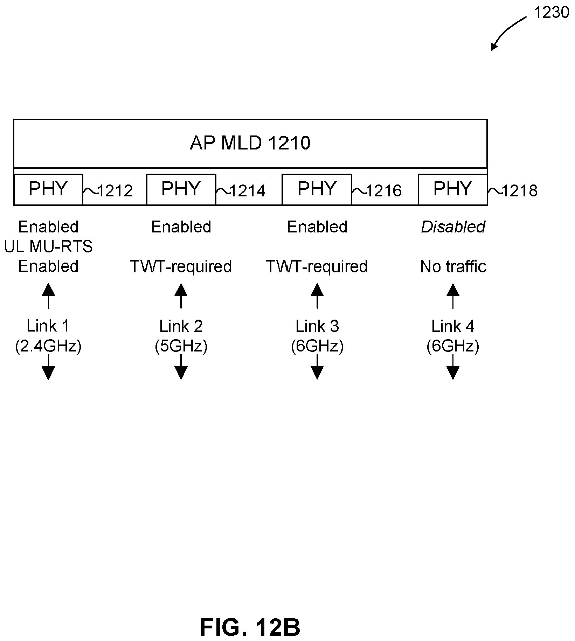

FIG. 12B illustrates example 1230 of AP power save enhancements with affiliated AP availability signaling, according to some embodiments of the disclosure. For explanation purposes and not as a limitation, FIG. 12B may be described with reference to elements from FIGS. 1 and/or 2. For example, AP MLD 1210 can correspond to AP MLD 110 of FIG. 1, AP PHY 1212, 1214, 1216, and 1218, can correspond to respective affiliated APs of AP MLD 110 of system 100, where affiliated APs include both physical layer and Medium Access Control (MAC) layers. In some embodiments, an affiliated AP can operate as a legacy AP in one or more bands in which legacy STAs can associate. AP MLD 1210 can communicate with a non-AP MLD STA 120d and corresponding stations, STA 120a-120c, or mobile AP STA 150. AP MLD 1210 and/or STAs can be, or can be part of, a system 200 of FIG. 2.

In some embodiments, STAs associated with AP MLD 1210 know whether their associated AP and affiliated APs are available. For example, a STA associated with AP PHY 1212 can receive signals indicating that AP PHY 1212 is enabled and the UL MU-RTS Enabled feature (e.g., value=1) is enabled for link 1. In addition, the STA can also learn about one or more affiliated APs of AP MLD 1210 from AP PHY 1212. For example, the STA can learn the following: AP PHY 1214 is enabled and the TWT Required feature (e.g., value=1) is enabled for link 2; AP PHY 1216 is enabled and the TWT Required feature (e.g., value=1) is enabled for link 3; and/or AP PHY 1218 is disabled.

To alleviate the problem identified in example 1200, in some embodiments, one or more impending changes can be signaled to indicate reduced availability of certain APs associated with corresponding links. By way of example, changes reducing availability of an AP can include any/all of a transition from UL MU-RTS Enabled from value equal to 0 (e.g., disabled) to value equal to 1 (e.g., enabled), or increase of a padding delay length. Another example of a change reducing availability can be changing a TWT Required field value from value equal to 0 (e.g., disabled) to value equal to 1 (e.g., enabled). The signaling of one or more impending changes can include a countdown, or other such timer, indicating when the reduced availability of an AP will occur.

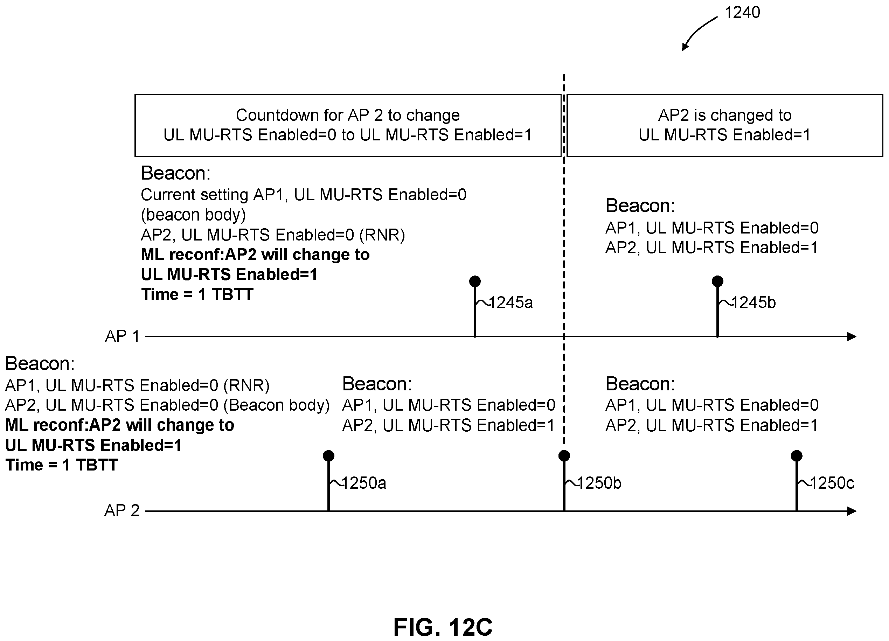

FIG. 12C illustrates example 1240 of AP power save enhancements with impending lower power change and affiliated AP availability signaling via beacons, according to some embodiments of the disclosure. For explanation purposes and not as a limitation, FIG. 12C may be described with reference to elements from FIG. 12B. For example, AP1 can correspond to AP PHY 1214 and AP2 can correspond to AP PHY 1216. Example 1240 illustrates a countdown for AP2 to change from UL MU-RTS Enabled value equal to 0 (e.g., disabled) to UL MU-RTS Enabled value equal to 1 (enabled).

AP1, a neighboring AP to AP2 can transmit beacon 1245a that indicates one or more current settings of AP1, such as UL MU-RTS Enabled value equal to 0, e.g., in the beacon body. Beacon 1245a also can include a Reduced Neighbor Report (RNR) that indicates one or more of AP2's current settings, such as UL MU-RTS Enabled value equal to 0. AP1 can also indicate, e.g., via a multi-link (ML) Reconfiguration element in a Beacon and Probe Response, a coming change that will result in lower availability for AP2. For example, the ML Reconfiguration element can indicate that AP2 will change to UL MU-RTS Enabled value equal to 1, and when the change will take place, e.g., after 1 target beacon transmission time (TBTT).

AP2 can transmit beacon 1250a that indicates one or more current settings of AP2, such as UL MU-RTS Enabled value equal to 0, e.g., in the beacon body. Beacon 1250a also can include an RNR that indicates AP1's current setting of UL MU-RTS Enabled value equal to 0. AP2 can also indicate, e.g., via an ML Reconfiguration element in a Beacon and Probe Response, a coming change that will result in lower availability for AP2. For example, the ML Reconfiguration element can indicate that AP2 will change to UL MU-RTS Enabled value equal to 1, and when the change will take place, e.g., after 1 TBTT.

AP2 can transmit beacon 1250b that indicates one or more current settings of AP2, such as UL MU-RTS Enabled value equal to 1, e.g., in the beacon body. Beacon 1250b also can include an RNR that indicates AP1's current setting of UL MU-RTS Enabled value equal to 0.

AP1 can transmit beacon 1245b that indicates one or more current settings of AP1, such as UL MU-RTS Enabled value equal to 0, and also can include a RNR that indicates AP2's current setting of UL MU-RTS Enabled value equal to 1.

AP2 can transmit beacon 1250c that indicates one or more current settings of AP2, such as UL MU-RTS Enabled value equal to 1 in the beacon body. Beacon 1250b also can include an RNR that indicates AP1's current setting of UL MU-RTS Enabled value equal to 0.

Thus, one or more STAs affiliated with AP MLD 1210 can learn about impending (coming) lower availability of one or more APs. For example, one or more STAs associated with AP1 and/or one or more STAs associated with AP2 can be made aware of the impending lower availability of AP2.

Note that an AP transition to a higher availability state (or mode) is immediate so consequently, delayed signaling is not needed for that change. Examples of a higher availability change that can occur immediately include a change from UL MU-RTS Enabled field value equal to 1 to a value equal to 0, meaning that UL MU-RTS features are no longer implemented. Another example of a higher availability change is a TWT Required field value change from a value equal to 1 (e.g., enabled) to a value equal to 0 (e.g., disabled), meaning that the AP is available all the time. In some embodiments, an AP may signal a TWT Required value change and/or a UL MU-RTS field value change in a new A-Control field. Consequently, one or more STAs can learn of the new field values with little or no delay and the full (or increased) availability (e.g., full power state) can be signaled in conjunction with the transition (e.g., immediately).

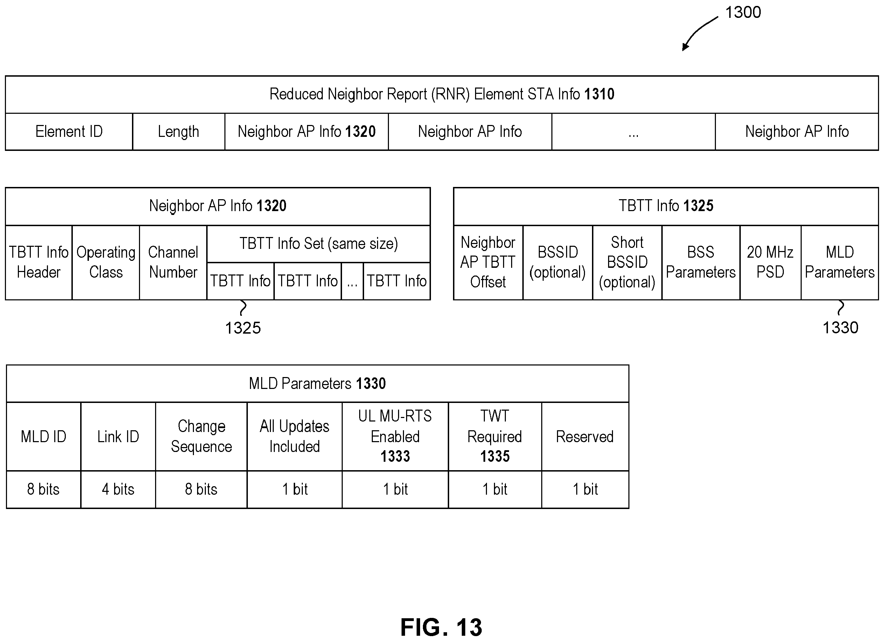

FIG. 13 illustrates example 1300 of AP power save enhancements with RNR for AP availability signaling, according to some embodiments of the disclosure. As an example and not as a limitation, RNR Element field 1310 can transmit one or more UL MU-RTS Enabled values associated with one or more neighboring APs, as described in FIG. 12C with regard to beacons 1245a and 1250a. In some embodiments, RNR Element field 1310 can include Neighbor AP Info field 1320. Neighbor AP Info field 1320 can include TBTT Info field 1325. TBTT Info field 1325 can include ML device (MLD) parameters field 1330. MLD parameters field 1330 can include UL MU-RTS Enabled field 1333 and TWT Required field 1335. As an example, a UL MU-RTS Enabled field value equal to 1 (e.g., enabled) signaled in RNR element field 1310 can indicate that a UL MU-RTS frame needs to be transmitted by a STA prior to transmitting in association with a TXOP. As another example, a TWT Required field value equal to 1 (e.g., enabled) signaled in RNR element field 1310 can indicate that transmissions from a STA to an AP should occur during a TWT SP.

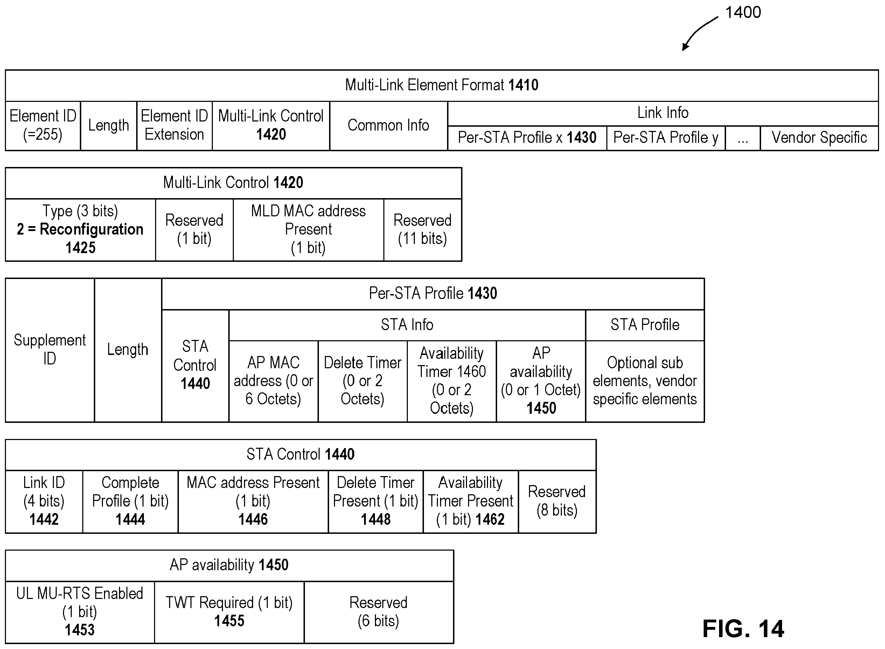

FIG. 14 illustrates example 1400 of AP power save enhancements with ML Reconfiguration Element for AP availability change signaling, according to some embodiments of the disclosure. As an example and not as a limitation, ML Reconfiguration Element Format field 1410 can signal one or more forthcoming AP power management changes (e.g., AP 2 will change to UL MU-RTS Enabled value equal to 1 after one TBTT) as described in FIG. 12C with regard to beacons 1245a and 1250a. Thus, one or more STAs can be informed of one or more impending power management changes and avoid (or mitigate) the problem described in FIG. 12A that can arise when a STA may miss one or more beacons. Thus, example 1400 can be used to implement example 1240 of FIG. 12C to improve interoperability and reduce frame loss among STAs and APs. In some embodiments, ML Element Format field 1410 can include ML control field 1420 and Per-STA profile x field 1430. ML Control field 1420 can include a Type field 1425 that indicates a Reconfiguration (e.g., Type value equal to 2). Multiple different ML elements are defined, and the Type field signals the variant in use. Per-STA Profile field 1430 can include STA control field 1440, Availability Timer field 1460, and AP availability field 1450. STA control field 1440 can further include any/all of the following fields: Link ID field 1442 that specifies the AP that will implement an impending power management mode change; Complete Profile field 1444, MAC Address Present field 1446, Delete Timer Present field 1448, and Availability Timer Present field 1462. The fields 1446, 1448 and 1462 signal whether the value is present in the ML element. Value 1 can indicate for example, that the value is included. As an example, an Availability Timer Present field 1462 value equal to 1 can indicate that Availability Timer field 1460 and AP Availability field 1450 are present. An Availability Timer field 1460 can indicate a number of TBTTs until the AP power management mode transitions (e.g., changes). AP Availability field 1450 can signal the impending AP availability settings, and can include UL MU-RTS Enabled field 1453 and TWT Required field 1455.

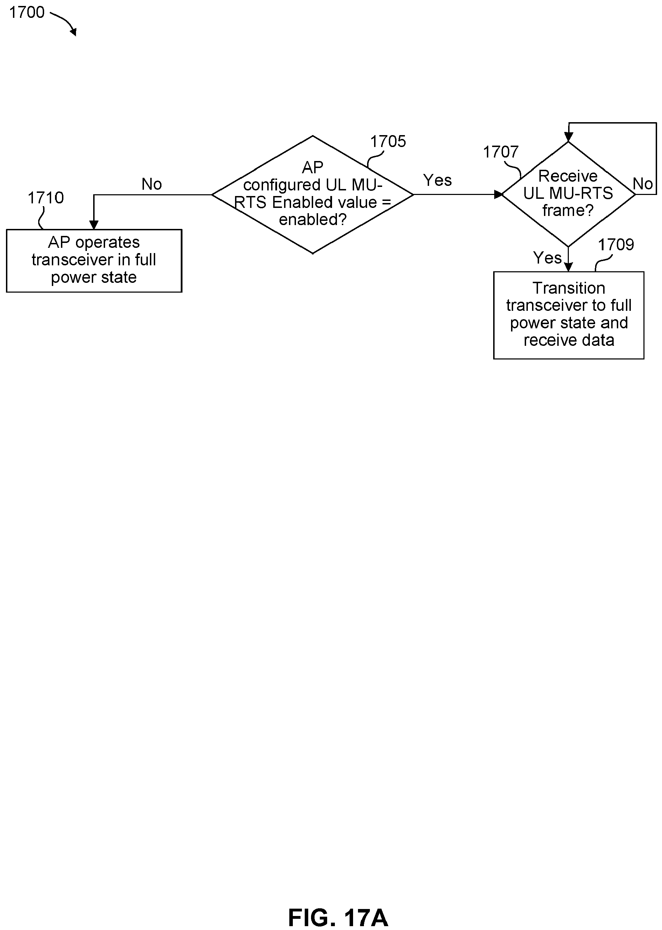

FIG. 17A illustrates method 1700 for AP power save enhancements with UL MU-RTS Enabled, according to some embodiments of the disclosure. For explanation purposes and not as a limitation, method 1700 may be described with reference to elements from FIGS. 1 and/or 2. For example, method 1700 can be performed by an AP including, but not limited to, AP MLD 110, AP 112, AP 114, AP 116, or mobile AP STA 150 of system 100. The AP can communicate with a STA that can be any of the electronic devices: non-AP MLD STA 120d, STA 122, STA 124, STA 126, STA 120a-120c, or mobile AP STA 150. The AP and/or STA can be, or can be part of, a system 200 of FIG. 2.

At 1705, a determination is made whether an AP configured UL MU-RTS Enabled value indicates that the AP power save feature is enabled (e.g., a value of 1). When the UL MU-RTS Enabled value indicates that the AP power save feature is enabled (e.g., example 450 of FIG. 4), method 1700 proceeds to determination 1707. Otherwise, method 1700 proceeds to 1710.

At 1707, a determination is made whether the AP has received a UL MU-RTS frame (e.g., UL MU-RTS frame 462 of FIG. 4B). When the UL MU-RTS frame has not been received, method 1700 remains at 1707. When the UL MU-RTS frame has been received, method 1700 proceeds to 1709.

At 1709, the AP initiates a transition of the transceiver to a full power state (e.g., full power state 415). The transition can be at least partially performed during a padding duration (e.g., padding duration 463). Once in the full power state, the AP can receive data (e.g., data 465). In some embodiments, the AP can transition the transceiver to the LPR state after reception of the data.

At 1710, when UL MU-RTS Enabled value indicates that the feature is disabled, the AP can operate the transceiver in a full power state.

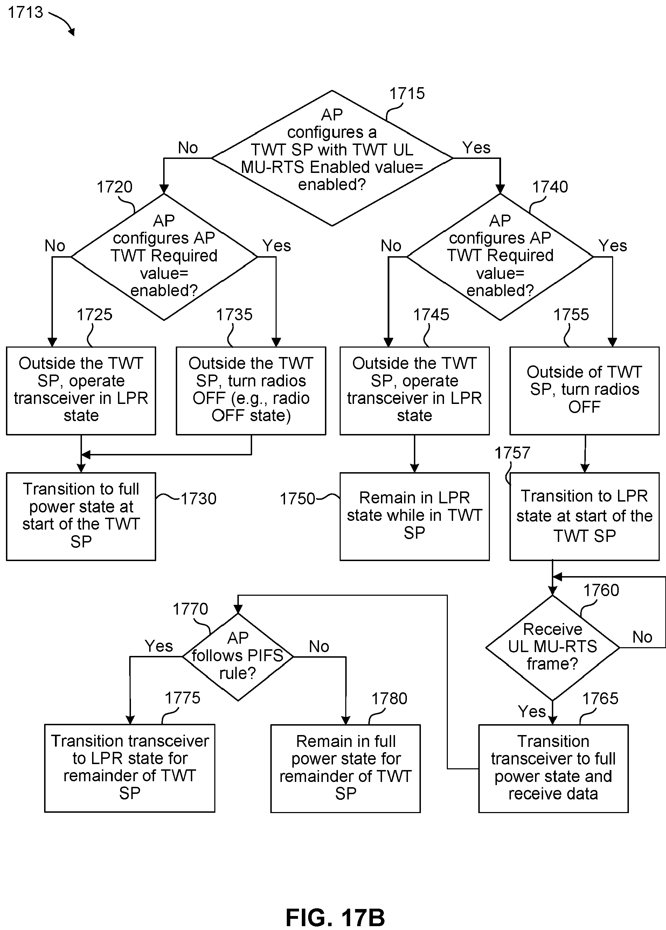

FIG. 17B illustrates method 1713 for AP power save enhancements with TWT Required and UL MU-RTS Enabled, according to some embodiments of the disclosure. For explanation purposes and not as a limitation, method 1713 may be described with reference to elements from FIGS. 1 and/or 2. For example, method 1713 can be performed by an AP including, but not limited to, AP MLD 110, AP 112, AP 114, AP 116, or mobile AP STA 150 of system 100. The AP can communicate with a STA that can be any of the electronic devices: non-AP MLD STA 120d, STA 122, STA 124, STA 126, STA 120a-120c, or mobile AP STA 150. The AP and/or STA can be, or can be part of, a system 200 of FIG. 2.

At 1715, an AP power save feature, UL MU-RTS Enabled, has been enabled. A determination is made whether the AP has configured a TWT flow setting to enable TWT UL MU-RTS AP power enhancements during a TWT SP (e.g., example 800 of FIG. 8). When the AP has enabled enable TWT UL MU-RTS AP power enhancements during a TWT SP, the TWT UL MU-RTS Enabled value can be configured to indicate that the TWT flow feature is enabled. When the TWT UL MU-RTS Enabled value indicates that the TWT flow feature is disabled (e.g., TWT SP ID1 805), method 1713 proceeds to 1720. When the TWT UL MU-RTS Enabled value indicates that the TWT flow feature is enabled (e.g., TWT SP ID2 815), method 1713 proceeds to 1740.

At 1720, a determination is made whether the AP has configured an AP TWT Required value to indicate that the feature is enabled. When the AP TWT Required value indicates that the feature is disabled (e.g., case 2 of FIG. 8), method 1713 proceeds to 1725. When the AP TWT Required value indicates that the feature is enabled (e.g., case 3 of FIG. 8), method 1713 proceeds to 1735.

At 1725, when the AP TWT Required value is set to disabled (e.g., case 2 of FIG. 8) outside the TWT SP (e.g., TWT SP ID1 805), the AP operates a transceiver (e.g., data radio 313 of FIG. 3) in LPR state (e.g., LPR state 835 of FIG. 8). This can be the case when UL MU-RTS is enabled in a mobile AP, for example.

At 1730, the AP transitions the transceiver to a full power state (e.g., full power state 840) at the start of the TWT SP (e.g., TWT SP ID1 805).

At 1735, when the AP TWT Required value is set to enabled (e.g., case 3 of FIG. 8), outside the TWT SP (e.g., TWT SP ID1 805), the AP turns one or more radios OFF (e.g., radio OFF state 850). In some examples, the AP can return to 1730 where the transceiver is transitioned to full power state (e.g., full power state 855) at start of a TWT SP (e.g., TWT SP ID1 805.)

At 1740, a determination is made whether AP TWT Required value is set to enabled. When the AP TWT Required value is set to disabled (e.g., case 2 of FIG. 8), method 1713 proceeds to 1745. When the AP TWT Required value is set to enabled (e.g., case 3 of FIG. 8), method 1713 proceeds to 1755.

At 1745, when the AP TWT Required value is set to disabled (e.g., case 2 of FIG. 8) outside the TWT SP (e.g., TWT SP ID2 815), the AP operates a transceiver (e.g., data radio 313 of FIG. 3) in an LPR state (e.g., LPR state 845 of FIG. 8.)

At 1750, the AP maintains the transceiver in the LPR state (e.g., LPR state 845) at the start of the TWT SP (e.g., TWT SP ID2 815).

At 1755, when the AP TWT Required value is set to enabled (e.g., case 3 of FIG. 8), outside the TWT SP (e.g., TWT SP ID2 815), the AP turns one or more radios OFF (e.g., radio OFF state 860).

At 1757, the AP can transition the transceiver to an LPR state (e.g., LPR state 865) at the start of the TWT SP (e.g., TWT SP ID2 815).

At 1760, a determination is made whether the AP has received a UL MU-RTS frame (e.g., based on the determination at 1715 that the AP power save feature is enabled, UL MU-RTS Enabled value is set to enabled). When the UL MU-RTS frame has not been received, method 1713 remains at 1760. When the UL MU-RTS frame has been received (e.g., UL MU-RTS frame 907 of FIG. 9), method 1713 proceeds to 1765.

At 1765, the AP can transition the transceiver to a full power state (e.g., full power state 970 or 985) and receive data.

At 1770, a determination is made whether the AP follows a PIFS rule. When the AP follows the PIFS rule, method 1713 proceeds to 1775. Otherwise, method 1713 proceeds to 1780.

At 1775, after the AP receives data (e.g., data 940) and no transmissions take place after the PIFS, the AP can transition the transceiver to an LPR state (e.g., LPR state 975) for the remainder of TWT SP (e.g., TWT SP ID2 815).

At 1780, when the AP does not follow the PIFS rule, the AP can remain in a full power state (e.g., full power state 985) for the remainder of the TWT SP (e.g., TWT SP ID2 815).

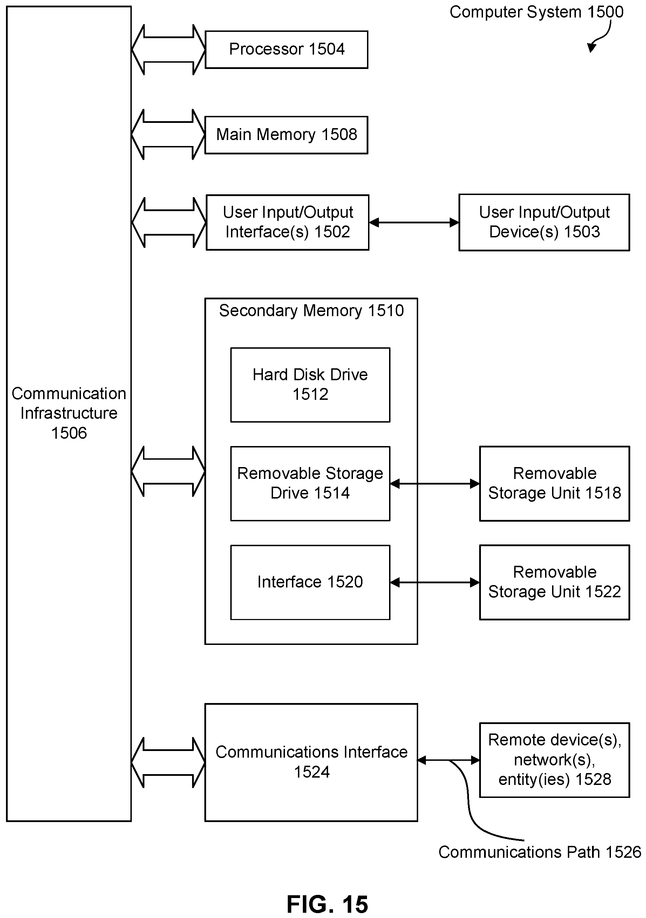

Various embodiments can be implemented, for example, using one or more well-known computer systems, such as computer system 1500 shown in FIG. 15. Computer system 1500 can be any well-known computer capable of performing the functions described herein. For example, and without limitation: AP MLD 110, AP 112, AP 114, AP 116, mobile AP STA 150, non-AP MLD STA 120d, STA 122, STA 124, STA 126, or STA 120a-120c of FIG. 1, system 200 of FIG. 2, electronic devices of FIGS. 3, 4A, 4B, 5, 6A, 6B, 7A, 7B, 8, 9, 10A, 10B, 11, 12A, 12B, 12C, and methods 1700 and 1713 of FIGS. 17A and 17B (and/or other apparatuses and/or components shown in the figures) may be implemented using computer system 1500, or portions thereof.

Computer system 1500 includes one or more processors (also called central processing units, or CPUs), such as a processor 1504. Processor 1504 is connected to a communication infrastructure 1506 that can be a bus. One or more processors 1504 may each be a graphics processing unit (GPU). In an embodiment, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1500 also includes user input/output device(s) 1503, such as monitors, keyboards, pointing devices, etc., that communicate with communication infrastructure 1506 through user input/output interface(s) 1502. Computer system 1500 also includes a main or primary memory 1508, such as random access memory (RAM). Main memory 1508 may include one or more levels of cache. Main memory 1508 has stored therein control logic (e.g., computer software) and/or data.

Computer system 1500 may also include one or more secondary storage devices or memory 1510. Secondary memory 1510 may include, for example, a hard disk drive 1512 and/or a removable storage device or drive 1514. Removable storage drive 1514 may be a floppy disk drive, a magnetic tape drive, a compact disk drive, an optical storage device, tape backup device, and/or any other storage device/drive.

Removable storage drive 1514 may interact with a removable storage unit 1518. Removable storage unit 1518 includes a computer usable or readable storage device having stored thereon computer software (control logic) and/or data. Removable storage unit 1518 may be a floppy disk, magnetic tape, compact disk, DVD, optical storage disk, and/ any other computer data storage device. Removable storage drive 1514 reads from and/or writes to removable storage unit 1518 in a well-known manner.

According to some embodiments, secondary memory 1510 may include other means, instrumentalities or other approaches for allowing computer programs and/or other instructions and/or data to be accessed by computer system 1500. Such means, instrumentalities or other approaches may include, for example, a removable storage unit 1522 and an interface 1520. Examples of the removable storage unit 1522 and the interface 1520 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1500 may further include a communication or network interface 1524. Communication interface 1524 enables computer system 1500 to communicate and interact with any combination of remote devices, remote networks, remote entities, etc. (individually and collectively referenced by reference number 1528). For example, communication interface 1524 may allow computer system 1500 to communicate with remote devices 1528 over communications path 1526, which may be wired and/or wireless, and which may include any combination of LANs, WANs, the Internet, etc. Control logic and/or data may be transmitted to and from computer system 1500 via communication path 1526.

The operations in the preceding embodiments can be implemented in a wide variety of configurations and architectures. Therefore, some or all of the operations in the preceding embodiments may be performed in hardware, in software or both. In some embodiments, a tangible, non-transitory apparatus or article of manufacture includes a tangible, non-transitory computer useable or readable medium having control logic (software) stored thereon is also referred to herein as a computer program product or program storage device. This includes, but is not limited to, computer system 1500, main memory 1508, secondary memory 1510 and removable storage units 1518 and 1522, as well as tangible articles of manufacture embodying any combination of the foregoing. Such control logic, when executed by one or more data processing devices (such as computer system 1500), causes such data processing devices to operate as described herein.

Based on the teachings contained in this disclosure, it will be apparent to persons skilled in the relevant art(s) how to make and use embodiments of the disclosure using data processing devices, computer systems and/or computer architectures other than that shown in FIG. 15. In particular, embodiments may operate with software, hardware, and/or operating system implementations other than those described herein.

It is to be appreciated that the Detailed Description section, and not the Summary and Abstract sections, is intended to be used to interpret the claims. The Summary and Abstract sections may set forth one or more but not all exemplary embodiments of the disclosure as contemplated by the inventor(s), and thus, are not intended to limit the disclosure or the appended claims in any way.

While the disclosure has been described herein with reference to exemplary embodiments for exemplary fields and applications, it should be understood that the disclosure is not limited thereto. Other embodiments and modifications thereto are possible, and are within the scope and spirit of the disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. In addition, alternative embodiments may perform functional blocks, steps, operations, methods, etc. using orderings different from those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein.

The breadth and scope of the disclosure should not be limited by any of the above-described exemplary embodiments, but should be defined only in accordance with the following claims and their equivalents.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

### Additional Statements

According to an aspect of the invention, there is provided an access point (AP) comprising: a transceiver; and a processor coupled to the transceiver, configured to: receive, via the transceiver operating in a low power receive (LPR) state, a first uplink (UL) multi-user (MU)-Request to Send (RTS) frame, wherein the AP has implemented a UL MU-RTS power save feature; initiate transitioning the transceiver to a full power state during a first padding duration corresponding to the first UL MU-RTS frame; receive, subsequent to transitioning to the full power state, first data via the transceiver; and transition, subsequent to receiving the first data, the transceiver to the LPR state.

Preferably, wherein the processor is further configured to: configure, for a first Target Wake Time (TWT) service period (SP), a TWT UL MU-RTS AP power enhancement feature, wherein the transceiver operates in the LPR state outside of the first TWT SP, and the transceiver transitions to the full power state at a start of the first TWT SP.

Preferably, wherein the processor is further configured to: configure, for a second TWT SP, the TWT UL MU-RTS AP power enhancement feature, wherein the transceiver operates in the LPR state at a start of the second TWT SP; and wherein the first TWT SP overlaps with a second TWT SP, operate the transceiver at a highest availability required of the first TWT SP and the second TWT SP.

Preferably, wherein both the first TWT SP and the second TWT SP correspond to a first station (STA), and the processor is further configured to: transmit, via the transceiver, to the first STA, an early termination signal corresponding to the first TWT SP and the second TWT SP; and transition the transceiver to an off state subsequent to acknowledgement, by the first STA, of the early termination signal.

Preferably, wherein the processor is further configured to: configure, for a first Target Wake Time (TWT) service period (SP), a TWT UL MU-RTS AP power enhancement feature, wherein the transceiver is in an OFF state outside of the first TWT SP; and transition the transceiver to the LPR state at a start of the first TWT SP.

Preferably, wherein the processor is further configured to: receive, via the transceiver operating in the LPR state, a second UL MU-RTS frame; initiate transitioning the transceiver to the full power state during a second padding duration corresponding to the second UL MU-RTS frame; receive, subsequent to transitioning to the full power state, second data via the transceiver; and wherein no transmissions occur during a Point Coordination Function (PCF) Interframe Space (PIFS) following the second data, transition the transceiver to the LPR state.

Preferably, wherein the processor is further configured to: receive, via the transceiver operating in the LPR state, a second UL MU-RTS frame; initiate transitioning the transceiver to the full power state during a second padding duration corresponding to the second UL MU-RTS frame; and receive, subsequent to transitioning the transceiver to the full power state, second data and maintaining the transceiver in the full power state until an end of the first TWT SP.

Preferably, wherein a bandwidth for receiving the first data is greater than 20 MHz.

According to an aspect of the invention, there is provided method of operating an access point (AP) comprising: receiving, via a transceiver operating in a low power receive (LPR) state, a first uplink (UL) multi-user (MU)-Request to Send (RTS) frame, wherein the AP has implemented a UL MU-RTS power save feature; initiating transitioning the transceiver to a full power state during a first padding duration corresponding to the first UL MU-RTS frame; receiving, subsequent to transitioning to the full power state, first data via the transceiver; and transitioning, subsequent to receiving the first data, the transceiver to the LPR state.

Preferably, further comprising: configuring, for a first Target Wake Time (TWT) service period (SP), a TWT UL MU-RTS AP power enhancement feature, wherein the transceiver operates in the LPR state outside of the first TWT SP, and the transceiver transitions to a full power state at a start of the first TWT SP.

Preferably, further comprising: configuring, for a first Target Wake Time (TWT) service period (SP), a TWT UL MU-RTS AP power enhancement feature, wherein the transceiver operates in an OFF state outside of the first TWT SP; and transitioning the transceiver to the LPR state at a start of the first TWT SP.

Preferably, further comprising: receiving, via the transceiver operating in the LPR state, a second UL MU-RTS frame; initiating transitioning the transceiver to the full power state during a second padding duration corresponding to the second UL MU-RTS frame; receiving, subsequent to transitioning to the full power state, second data via the transceiver; and wherein no transmissions occur during a Point Coordination Function (PCF) Interframe Space (PIFS) following the second data, transitioning the transceiver to the LPR state.

Preferably, further comprising: receiving, via the transceiver operating in the LPR state, a second UL MU-RTS frame; initiating transitioning the transceiver to the full power state during a second padding duration corresponding to the second UL MU-RTS frame; and receiving, subsequent to transitioning the transceiver to the full power state, second data and maintaining the transceiver in the full power state until an end of the first TWT SP.

Preferably, wherein the AP is a first AP in a multilink device (MLD) AP, wherein the MLD AP comprises a second AP, comprising: transmitting a beacon comprising an impending lower availability indication for the second AP, wherein the impending lower availability indication comprises a number of target beacon transmission times (TBTTs) before a power change corresponding to the impending lower availability indication occurs.

According to an aspect of the invention, there is provided a non-transitory computer-readable medium storing instructions that, when executed by a processor of an access point (AP) cause the AP to perform operations, the operations comprising: receiving, via a transceiver operating in a low power receive (LPR) state, a first uplink (UL) multi-user (MU)-Request to Send (RTS) frame, wherein the AP has implemented a UL MU-RTS power save feature; initiate transitioning the transceiver to a full power state during a first padding duration corresponding to the first UL MU-RTS frame; receiving, subsequent to transitioning to the full power state, first data via the transceiver; and transitioning, subsequent to receiving the data, the transceiver to the LPR state.

Preferably, wherein the operations further comprise: configuring, for first Target Wake Time (TWT) service period (SP), a TWT UL MU-RTS AP power enhancement feature, wherein the transceiver operates in the LPR state outside of the first TWT SP, and the transceiver transitions to a full power state at a start of the first TWT SP.

Preferably, wherein the operations further comprise: configuring, for a first Target Wake Time (TWT) service period (SP), a TWT UL MU-RTS AP power enhancement feature, wherein the transceiver operates in an OFF state outside of the first TWT SP; and transitioning the transceiver to the LPR state at a start of the first TWT SP.

Preferably, wherein the operations further comprise: receiving, via the transceiver operating in the LPR state, a second UL MU-RTS frame; initiating transitioning the transceiver to the full power state during a second padding duration corresponding to the second UL MU-RTS frame; receiving, subsequent to transitioning to the full power state, second data via the transceiver; and wherein no transmissions occur during a Point Coordination Function (PCF) Interframe Space (PIFS) following the second data, transitioning the transceiver to the LPR state.

Preferably, wherein the operations further comprise: receiving, via the transceiver operating in the LPR state, a second UL MU-RTS frame; initiating transitioning the transceiver to the full power state during a second padding duration corresponding to the second UL MU-RTS frame; and receiving, subsequent to transitioning the transceiver to the full power state, second data and maintaining the transceiver in the full power state until an end of the first TWT SP.

Preferably, wherein the operations further comprise: detecting a transmission from a legacy station (STA); and transitioning to the full power state based at least on the detecting, wherein the transitioning to the full power state occurs at a next beacon period.

## Claims

1. An access point (AP) comprising:
a transceiver; and
a processor coupled to the transceiver, configured to:
receive, via the transceiver operating in a low power receive (LPR) state, a first uplink (UL) multi-user (MU)-Request to Send (RTS) frame, wherein the AP has implemented a UL MU-RTS power save feature;
initiate transitioning the transceiver to a full power state during a first padding duration corresponding to the first UL MU-RTS frame;
receive, subsequent to transitioning to the full power state, first data via the transceiver; and
transition, subsequent to receiving the first data, the transceiver to the LPR state.

2. The AP of claim 1, wherein the processor is further configured to:
configure, for a first Target Wake Time (TWT) service period (SP), a TWT UL MU-RTS AP power enhancement feature, wherein the transceiver operates in the LPR state outside of the first TWT SP, and the transceiver transitions to the full power state at a start of the first TWT SP.

3. The AP of claim 2, wherein the processor is further configured to:
configure, for a second TWT SP, the TWT UL MU-RTS AP power enhancement feature, wherein the transceiver operates in the LPR state at a start of the second TWT SP; and
wherein the first TWT SP overlaps with a second TWT SP, operate the transceiver at a highest availability required of the first TWT SP and the second TWT SP.

4. The AP of claim 3, wherein both the first TWT SP and the second TWT SP correspond to a first station (STA), and the processor is further configured to:
transmit, via the transceiver, to the first STA, an early termination signal corresponding to the first TWT SP and the second TWT SP; and
transition the transceiver to an off state subsequent to acknowledgement, by the first STA, of the early termination signal.

5. The AP of claim 1, wherein the processor is further configured to:
configure, for a first Target Wake Time (TWT) service period (SP), a TWT UL MU-RTS AP power enhancement feature, wherein the transceiver is in an OFF state outside of the first TWT SP; and
transition the transceiver to the LPR state at a start of the first TWT SP.

6. The AP of any preceding claim, wherein the processor is further configured to:
receive, via the transceiver operating in the LPR state, a second UL MU-RTS frame;
initiate transitioning the transceiver to the full power state during a second padding duration corresponding to the second UL MU-RTS frame;
receive, subsequent to transitioning to the full power state, second data via the transceiver; and
wherein no transmissions occur during a Point Coordination Function (PCF) Interframe Space (PIFS) following the second data, transition the transceiver to the LPR state.

7. The AP of any of claims 1 to 5, wherein the processor is further configured to:
receive, via the transceiver operating in the LPR state, a second UL MU-RTS frame;
initiate transitioning the transceiver to the full power state during a second padding duration corresponding to the second UL MU-RTS frame; and
receive, subsequent to transitioning the transceiver to the full power state, second data and maintaining the transceiver in the full power state until an end of the first TWT SP.

8. The AP of any preceding claim, wherein a bandwidth for receiving the first data is greater than 20 MHz.

9. A method of operating an access point (AP) comprising:
receiving, via a transceiver operating in a low power receive (LPR) state, a first uplink (UL) multi-user (MU)-Request to Send (RTS) frame, wherein the AP has implemented a UL MU-RTS power save feature;
initiating transitioning the transceiver to a full power state during a first padding duration corresponding to the first UL MU-RTS frame;
receiving, subsequent to transitioning to the full power state, first data via the transceiver; and
transitioning, subsequent to receiving the first data, the transceiver to the LPR state.

10. The method of claim 9, further comprising:
configuring, for a first Target Wake Time (TWT) service period (SP), a TWT UL MU-RTS AP power enhancement feature, wherein the transceiver operates in the LPR state outside of the first TWT SP, and the transceiver transitions to a full power state at a start of the first TWT SP.

11. The method of claim 9, further comprising:
configuring, for a first Target Wake Time (TWT) service period (SP), a TWT UL MU-RTS AP power enhancement feature, wherein the transceiver operates in an OFF state outside of the first TWT SP; and
transitioning the transceiver to the LPR state at a start of the first TWT SP.

12. The method of any of claims 9 to 11, further comprising:
receiving, via the transceiver operating in the LPR state, a second UL MU-RTS frame;
initiating transitioning the transceiver to the full power state during a second padding duration corresponding to the second UL MU-RTS frame.
receiving, subsequent to transitioning to the full power state, second data via the transceiver; and
wherein no transmissions occur during a Point Coordination Function (PCF) Interframe Space (PIFS) following the second data, transitioning the transceiver to the LPR state.

13. The method of any of claims 9 to 11, further comprising:
receiving, via the transceiver operating in the LPR state, a second UL MU-RTS frame;
initiating transitioning the transceiver to the full power state during a second padding duration corresponding to the second UL MU-RTS frame; and
receiving, subsequent to transitioning the transceiver to the full power state, second data and maintaining the transceiver in the full power state until an end of the first TWT SP.

14. The method of any of claims 9 to 13, wherein the AP is a first AP in a multilink device (MLD) AP, wherein the MLD AP comprises a second AP, comprising:
transmitting a beacon comprising an impending lower availability indication for the second AP, wherein the impending lower availability indication comprises a number of target beacon transmission times (TBTTs) before a power change corresponding to the impending lower availability indication occurs.

15. A non-transitory computer-readable medium storing instructions that, when executed by a processor of an access point (AP) cause the AP to carry out a method according to any of claims 9 to 14.
